Europäisches Patentamt

European Patent Office

Office européen des brevets

(11) Veröffentlichungsnummer: **0 335 086 B1**

## (12) EUROPÄISCHE PATENTSCHRIFT

(45) Veröffentlichungstag der Patentschrift: **04.11.92**

(21) Anmeldenummer: **89102297.2**

(22) Anmeldetag: **10.02.89**

(51) Int. Cl.⁵: **B60T 1/10**, B60K 25/00

(54) **Kraftfahrzeug mit Einrichtung zur Schubzuschaltung von Nebenverbrauchern.**

(30) Priorität: **26.03.88 DE 3810340**

(43) Veröffentlichungstag der Anmeldung:
**04.10.89 Patentblatt 89/40**

(45) Bekanntmachung des Hinweises auf die
Patenterteilung:
**04.11.92 Patentblatt 92/45**

(84) Benannte Vertragsstaaten:
**DE FR IT NL SE**

(56) Entgegenhaltungen:
**EP-A- 0 052 527**
**DE-A- 2 735 423**
**DE-A- 3 514 375**
**DE-A- 3 525 107**

(73) Patentinhaber: **MAN Nutzfahrzeuge Aktiengesellschaft**
**Dachauer Strasse 667 Postfach 50 06 20**
**W-8000 München 50(DE)**

(72) Erfinder: **von Korff, Peter, Dipl.-Ing.**
**Seestrasse 14**
**W-8084 Buch(DE)**
Erfinder: **Drewitz, Hans, Ing. (grad.)**
**Agnesstrasse 54**
**W-8000 München 40(DE)**
Erfinder: **Steiner, Lorenz**
**Laurentiusstrasse 7a**
**W-8064 Altomünster(DE)**

EP 0 335 086 B1

**Beschreibung**

Die Erfindung betrifft ein Kraftfahrzeug, insbesondere Lkw oder Omnibus, mit wenigstens einer Brennkraftmaschine mit nachgeordnetem Getriebe, an dessen Abtrieb ein Achsantriebsstrang und über Nebenabtriebe bedarfsweise zuschaltbare Antriebsaggregate, die zum Betrieb von Nebenverbrauchern oder zur Ladung von Speichern dieser Nebenverbraucher notwendig sind, angeschlossen sind, und mit einer Einrichtung zur Schubzuschaltung, mit der nach erkanntem Wechsel von Zug- auf Schubbetrieb eine gezielte Zuschaltung der besagten Antriebsaggregate an den Antriebsstrang des Fahrzeugs und danach deren Betrieb im Sinne einer geregelten Ladung der Speicher steuerbar ist.

Insbesondere in Nutzfahrzeugen sind eine Reihe von Speichern zur Versorgung von Nebenverbrauchern vorhanden, welche ständig eine bestimmte Ladung aufweisen müssen, um einen sicheren Betrieb des Fahrzeugs oder seiner Nebenverbraucher sicherzustellen. Je mehr solcher Nebenverbraucher in einem Fahrzeug vorhanden sind, desto mehr Speicher bzw. größere Speicher sind erforderlich. Die Leistung für das Laden dieser Speicher wird von der fahrzeuginternen Brennkraftmaschine über Nebenabtriebe an entsprechende Ladeaggregate abgegeben. Je nach Notwendigkeit der erforderlichen Ladeoperationen wird somit relativ viel Leistung von der Brennkraftmaschine abgezweigt, die dann für den Antrieb des Achsantriebsstranges nicht zur Verfügung steht.

Demgegenüber steht bei Talfahrten und Schubzuständen ein hohes Leistungsangebot an kinetischer Energie des Fahrzeugs zur Verfügung, wobei diese Energie in der Regel über die Bremsen in Verlustleistung umgesetzt wird. Dies ist jedoch unwirtschaftlich.

Dieser vorgeschilderte Nachteil wird bei einem aus der DE-A-3525107 bekannten Fahrzeug weitgehend vermieden, jedoch ist der dortige Regelungs- und Steuerungsaufwand aus folgenden Gründen ungenügend.

Für die Erkennung, ob anstelle eines Zugbetriebs des Fahrzeugs ein Schubbetrieb desselben vorliegt oder eintritt, wird dort ausschließlich die Stellung des Fahr- bzw. Gaspedals herangezogen, mit dem ein einfacher Schalter verbunden ist. Damit läßt sich aber definitiv nicht eindeutig in allen Fahrzeugbetriebssituationen der Zustand Schub- oder Zugbetrieb erkennen. Die Gas- oder Fahrpedalstellung „0" kann nämlich ebenso wie eine Fördermengenverstellgliedeinstellung „0" an der Einspritzpumpe kein eindeutiges Nachweiskriterium für einen Wechsel von Zug- auf Schubbetrieb sein. Diese „0"-Einstellungen der besagten Organe können nämlich auch bei Fahrzeugstillstand gegeben sein, wobei der Antriebsmotor dann mit Leerlaufdrehzahl läuft, ersichtlicherweise dann auch keine Talfahrtschwungenergie oder Bremsenergie anfällt, die im Schubbetrieb zum Antrieb der Nebenaggregate und Ladung der zugehörigen Speicher ausgenutzt werden soll. Andererseits ist aber auch eine von „0" abweichende Einstellung des Fahrpedals und des Fördermengenverstellgliedes der Einspritzpumpe kein exaktes Defnitionskriterium, weil diese Einstellung der besagten Organe ebenfalls bei einem Fahrzeugstillstand, d.h. bei nicht eingelegtem Getriebegang, vorgenommen werden kann.

Desweiteren ist in besagtem Dokument, was die Steuerung der Ladung der Speicher während des Schubbetriebes anbelangt, lediglich ausgesagt, daß sich durch eine Zeit- und Bedarfsregelelektronik bestimmte Zuordnungen optimieren, beispielsweise zeitversetzte Einschaltungen erreichen lassen, so daß nicht alle Nebenaggregate zur gleichen Zeit eingeschaltet werden.

Damit ist zwar zum Ausdruck gebracht, daß abhängig von einem bestimmten Bedarf eine Zu- und Abschaltung der Antriebsaggregate der Nebenverbraucher vorgesehen sein kann, es ist jedoch absolut nichts über die Kriterien, die hierfür maßgebend sind, und auch nichts über eine entsprechende Rangfolge mit entsprechender Steuerung ausgesagt.

Desweiteren sei der Vollständigkeit wegen auch noch auf die EP-A-52527 hingewiesen. Diese Schrift offenbart für ein Fahrzeug einen Antrieb von Nebenaggregaten. Dabei sind letztere von der Kurbelwelle des Motors her über Transmissionsriemen angetrieben und es ist eine Regelung in dem Sinne vorgesehen, daß die Abschaltung der Nebenaggregate abhängig vom Füllungsgrad der versorgten Speicher nach Art einer Rangfolge erfolgen soll.

Es ist demgegenüber Aufgabe der Erfindung, ein Kraftfahrzeug der eingangs genannten Art so auszubilden, daß ein Wechsel von Zug- in Schubbetrieb des Fahrzeugs und umgekehrt eindeutig erkennbar sind und außerdem die während des Fahrbetriebes gegebene kinetische Energie des Fahrzeug bestmöglich ausnutzbar ist, in der Weise, daß eine bedarfsoptimierte Ladung aller fahrzeugintern vorhandenen Speicher und der notwendige Betrieb der Nebenverbraucher in allen Fahrbetriebszuständen, also sowohl im Normalfahrbetrieb (Zugbetrieb) als auch im Schubbetrieb, sichergestellt wird.

Diese Aufgabe ist erfindungsgemäß durch ein Kraftfahrzeug mit den im Anspruch 1 angegebenen Merkmalen gelöst.

Vorteilhafte Ausgestaltungen und Weiterbildungen dieser Lösung sind in den Unteransprüchen angegeben.

Kernstück der erfindungsgemäßen Lösung ist eine elektronische Steuereinrichtung, die mit bestimmten Betriebszustandssignalen versorgt wird, aufgrund derer sie einen Wechsel der Brennkraftmaschine von Zug- auf Schubbetrieb und umgekehrt eindeutig erkennt. Sobald ein solcher Schubbetrieb erkannt wird, werden der Brennkraftmaschine durch die Steuereinrichtung gezielt eines oder mehrere der Antriebsaggregate der fahrzeuginternen Anlagen zugeschaltet, zwecks Ladung der zugehörigen Speicher, und zwar in einer bestimmten Rangfolge, die in einer Prioritätenwahlschaltung aufgrund von Versorgungsnotwendigkeiten und Sicherheitserfordernissen festgelegt ist, und abhängig von einem durch Vergleich vorgegebener Sollwerte mit ermittelten Istwerten signalisierten Ladebedarf der Speicher.

Damit wird die während eines Schubbetriebes gegebene Energie, die vom Fahrzeugantriebsstrang her bis zu den motorseitigen Nebenabtrieben durchgeleitet wird, vollständig und in günstigster Weise ausgenutzt, nämlich zur Ladung eines oder mehrer Speicher während dieser Betriebsphase. Aufgrund der in der Prioritätenwahlschaltung festgelegten Zuschaltrangfolge ist sichergestellt, daß auch im Schubbetrieb immer zunächst jener Speicher geladen wird, der einer Anlage bzw. einem Nebenverbraucher zugehörig ist, die bzw. der hinsichtlich der für den Fahrbetrieb gegebenen Notwendigkeit höher eingestuft ist, als der Speicher einer anderen Anlage bzw. eines anderen Nebenverbrauchers.

Sobald von der elektronischen Steuereinrichtung ein Wechsel der Brennkraftmaschine von Schub- auf Zugbetrieb erkannt und außerdem ein weiterer Ladebedarf für einen oder mehrere Speicher erkannt wird, steuert die elektronische Steuereinrichtung die weitere Ladung des bzw. der Speicher ebenfalls im Sinne der durch die Prioritätenwahlschaltung festgelegten Rangfolge auch in normalen Fahrbetrieb. Bei jeweils erkannter ausreichender Füllung eines Speichers wird dann von der elektronischen Steuereinrichtung das zugehörige Antriebsaggregat ladungsmäßig oder antriebsmäßig stillgesetzt.

Insgesamt gesehen ist somit ein Kraftfahrzeug geschaffen, bei dem die in unterschiedlichen Fahrbetriebszuständen gegebene Energie besser als bisher genutzt ist.

Nachstehend ist die erfindungsgemäße Lösung anhand der Zeichnung noch näher erläutert. In der Zeichnung zeigen:

Fig. 1
weitgehend schematisiert verschiedene Teile eines Kraftfahrzeugs und ein Blockschaltbild einer Ausführungsform der zugehörigen elektronischen Steuereinrichtung gemäß der Erfindung,

Fig. 2
schematisiert eine Motorkühlanlage,

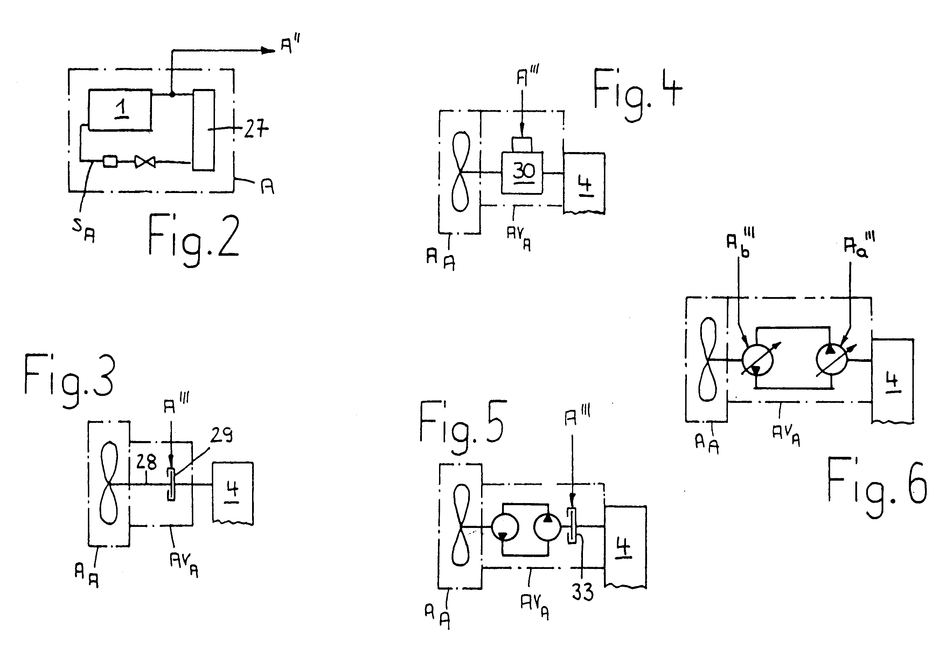

Fig 3, 4, 5 und 6
je eine Ausführungsform einer Antriebsverbindung für den der Motorkühlanlage gemäß Figur 2 zugehörigen Lüfter,

Fig 7, 8, 9 und 10
je eine Lenkhilfeanlage des Fahrzeuges mit je einer Ausführungsform eines Ladeorganes und einer Antriebsverbindung für dieses,

Fig 11 und 12
je eine Ausführungsform einer Einrichtung zum bedarfsweisen Laden einer Batterie,

Fig 13
weitgehend schematisiert eine Bremsenergierückgewinnungseinrichtung des Kraftfahrzeuges, ergänzt um diverse Arbeitseinrichtungen des Kraftfahrzeuges,

Fig 14
mehrere Speicher mit Ladeorgan und zu versorgenden Anlagen sowie einer Ausführungsform der Antriebsverbindung für besagtes Ladeorgan, und

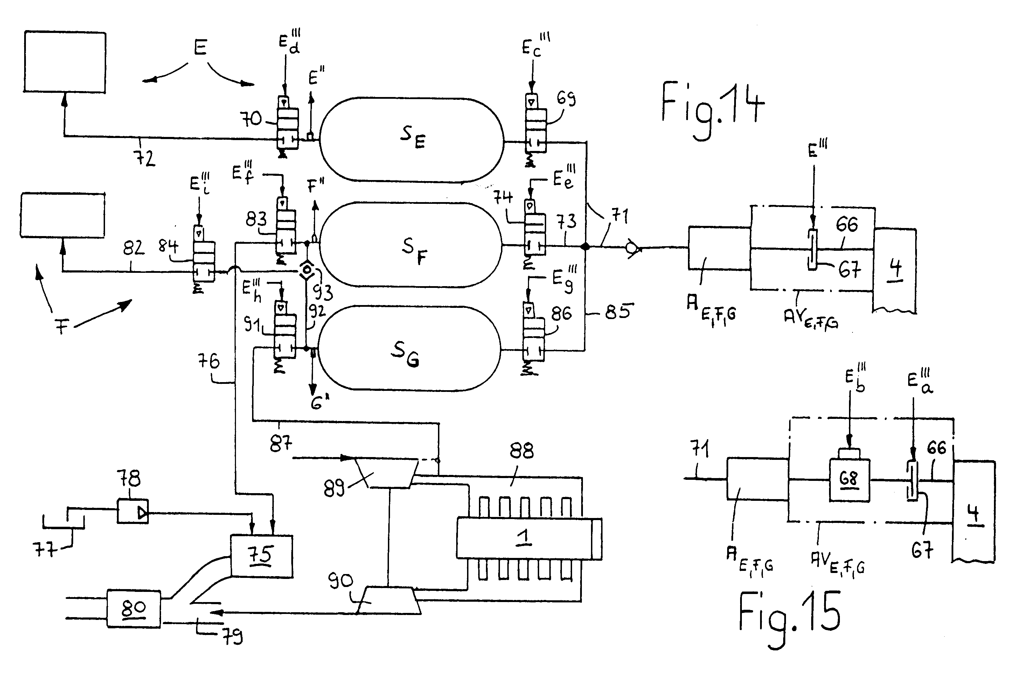

Fig 15
eine Alternative der Antriebsverbindung zu jener gemäß Figur 14.

Die erfindungsgemäße Einrichtung kommt bevorzugt in Nutzfahrzeugen wie Lkw's oder Omnibussen zur Anwendung. Von diesem Kraftfahrzeug sind in der Zeichnung nur jene Teile dargestellt, die für das Verständnis der Erfindung notwendig sind. Dabei handelt es sich um eine Brennkraftmaschine 1 mit nachgeordnetem Getriebe 2, das um ein Schaltgetriebe oder automatisches Getriebe sein kann. Von der Brennkraftmaschine 1 ist Leistung über einen ersten Abtrieb 3 an einen nicht dargestellten Achsantriebsstrang und über Nebenabtriebe 4 an bedarfsweise zuschaltbare Antriebsaggregate $A_A$, $A_B$, $A_C$, $A_D$, $A_{EFG}$ abgebbar, die zur Ladung der Speicher $S_A$, $S_B$, $S_C$, $S_D$, $S_E$, $S_F$, $S_G$ von Nebenverbrauchern A, B, C, D, E, F, G notwendig sind. Der insbesondere als Dieselmotor ausgebildeten Brennkraftmaschine 1 ist eine Einspritzpumpe 5 zugeordnet, die von einem der Nebenantriebe 4 aus antreibbar ist. Mit 6 ist die Einspritzpumpen-Regeleinrichtung bezeichnet, die ihre elektrischen Befehle über Leitungen 7 erhält.

Kernstück der erfindungsgemäßen Lösung ist eine elektronische Steuereinrichtung 8. Diese Steuereinrichtung 8 erfaßt aufgrund eingeleiteter Betriebszustandssignale einen Wechsel der Brennkraftmaschine 1 von Zug- auf Schubbetrieb durch interne Schaltungsmittel. Dabei handelt es sich um einen Vergleicher 9, der mit den Istwerten der Motordrehzahl ($n_M$), der beispielsweise von einer Raddrehzahl abgeleiteten Fahrgeschwindigkeit ($n_R$) und der Einspritzpumpen- bzw. Fahrpedalstellung ($\alpha_{EP}$) gespeist wird und der

a) wenn $n_R > 0$ und $\alpha_{EP} = 0$ und $n_M > n_{M1}$ - (Leerlaufdrehzahl) ein nachgeordnetes erstes UND-Glied 10 durchschaltet, wobei dessen Ausgangssignal 12 den Schubbetrieb signalisiert, bzw.

b) wenn $n_R \geq 0$ und $\alpha_{EP} > 0$ und $n_M > n_{M1}$ ein zweites nachgeordnetes UND-Glied 11 durchschaltet, dessen Ausgangssignal 13 den Zugbetrieb signalisiert.

Die Ausgänge 12 bzw. 13 der beiden UND-Glieder 10, 11 sind direkt bzw. über ein ODER-Glied mit dem Eingang eines Signalverstärkers 14 verbunden, dem ein Verzögerungsglied 15 nachgeschaltet sein kann, das die Weiterleitung des verstärkten Signals um eine eingestellte Zeitspanne verzögert und mit dessen Ausgangssignal die Funktion der übrigen Schaltorgane der Steuereinrichtung 8 in Gang gesetzt wird.

Die elektronische Steuereinrichtung 8 weist des weiteren einen Eingabespeicher 16 auf, in den die oberen und unteren Grenzwerte der Ladungen der Speicher $S_A$, $S_B$, $S_C$, $S_D$, $S_E$, $S_F$, $S_G$ als Sollwerte $A'_{min}$, $A'_{max}$, $B'_{min}$, $B'_{max}$, $C'_{min}$, $C'_{max}$, $D'_{min}$, $D'_{max}$, $E'_{min}$, $E'_{max}$, $F'_{min}$, $F'_{max}$, $G'_{min}$, $G'_{max}$ in Form entsprechender elektrischer Werte eingespeichert werden.

Außerdem verfügt die elektronische Steuereinrichtung 8 über einen weiteren Eingabespeicher 17, in den die Ist-Werte $A''$, $B''$, $C''$, $D''$, $E''$, $F''$, $G''$ der Ladungen der besagten Speicher fortlaufend eingegeben werden. Diese Ist-Werte werden in einem Vergleicher 18 fortlaufend mit den jeweiligen Sollwerten verglichen. Dieser Vergleicher 18 gibt bei Unterschreiten eines Sollwert-Bereiches ein Anforderungssignal für ein Laden des zugehörigen Speichers und bei Erreichen bzw. Überschreiten des oberen Soll-Grenzwertes ein Anforderungssignal für Abschalten des Ladevorgangs des zugehörigen Speichers ab. Die besagten Ist-Werte werden durch entsprechende Sensoren an den Speichern $S_A$, $S_B$, $S_C$, $S_D$, $S_E$, $S_F$, $S_G$ erfaßt, in entsprechende elektrische Signale umgewandelt und in dieser Form über entsprechende Meldeleitungen an den Eingabespeicher 17 geleitet.

Die elektronische Steuereinrichtung 8 schaltet bei erkanntem Schubbetrieb - gegebenenfalls nach definierter Verzögerung mittels des Verzögerungsgliedes 15 - an den Antriebsstrang des Kraftfahrzeuges gezielt eines oder mehrere der Antriebsaggregate $A_A$, $A_B$, $A_C$, $A_D$, $A_{EFG}$ der Nebenverbraucher A, B, C, D, E, F, G zu und zwar in einer bestimmten Rangfolge, die in einer Prioritätenwahlschaltung 19 aufgrund von Versorgungsnotwendigkeiten und Sicherheitserfordernissen festgelegt ist, und abhängig von einem durch Vergleich der vorgegebenen Sollwerte mit den ermittelten Istwerten signalisierten Ladebedarf der Speicher $S_A$, $S_B$, $S_C$, $S_D$, $S_E$, $S_F$, $S_G$.

Sobald von der elektronischen Steuereinrichtung 8 mittels des Vergleichers 9 jedoch ein Wechsel von Schub- auf Zugbetrieb erkannt wird und falls noch ein weiterer Speicher-Ladebedarf signalisiert wird, dann hält die elektronische Steuereinrichtung 8 das bzw. die besagte(n) Antriebsaggregat(e) rangfolgemäßig weiter in Antriebsverbindung mit dem Antrieb und schaltet außerdem bei vorhandenem Ladebedarf weiterer Speicher das bzw. die zugehörige(n) Antriebsaggregat(e) ebenfalls dem Antrieb rangfolgemäßig zu.

Bei erkannter ausreichender Füllung eines Speichers wird von der elektronischen Steuereinrichtung 8 das zugehörige Antriebsaggregat ladungsmäßig bzw. antriebsmäßig wieder stillgesetzt.

Für diese Steuerungsvorgänge erhält der Vergleicher 18 ein Startsignal, das vom Verstärker 14 bzw. dem nachgeschalteten Verzögerungsglied 15 kommt und repräsentativ für den erkannten Zugbetrieb oder Schubbetrieb ist. Die Prioritätenwahlschaltung 19 ist ebenso wie die beiden Eingabespeicher 16, 17 über einen Datenkanal (BUS) 20, 21 bzw. 22 mit dem Vergleicher 18 verbunden. An die Prioritätenwahlschaltung 19 ist über einen weiteren Datenkanal (BUS) 23 eine Funktionssteuerschaltung 24 angeschlossen, die über in einem Block 25 zusammengefaßte Ausgangsverstärker Steuersignale $A'''$, $B'''$, $C'''$, $D'''$, $E'''$, $F'''$, $G'''$ abgibt, mit denen die Zuschaltung, der Betrieb und die Abschaltung der Ladeorgane $A_A$, $A_B$, $A_C$, $A_D$, $A_E$, $A_F$, $A_C$ bzw. der zugehörigen Antriebsverbindungen $AV_A$, $AV_B$, $AV_C$, $AV_D$, $AV_E$, $AV_F$, $AV_G$ an die bzw. der bzw. von der Brennkraftmaschine 1 gesteuert wird. Darüber hinaus besitzt die Funktionssteuerleitung 24 vorzugsweise einen weiteren Ausgangsverstärkerblock 26, über den weitere Steuersignale für die Steuerung der Arbeitsfunktion der zu betreibenden Anlagen A, B, C, D, E, F, G ausgegeben werden können. Über einem Eingabeblock 97 sind der Funktionssteuerschaltung 24 weitere für den Betrieb des Fahrzeugs notwndige Daten eingebbar.

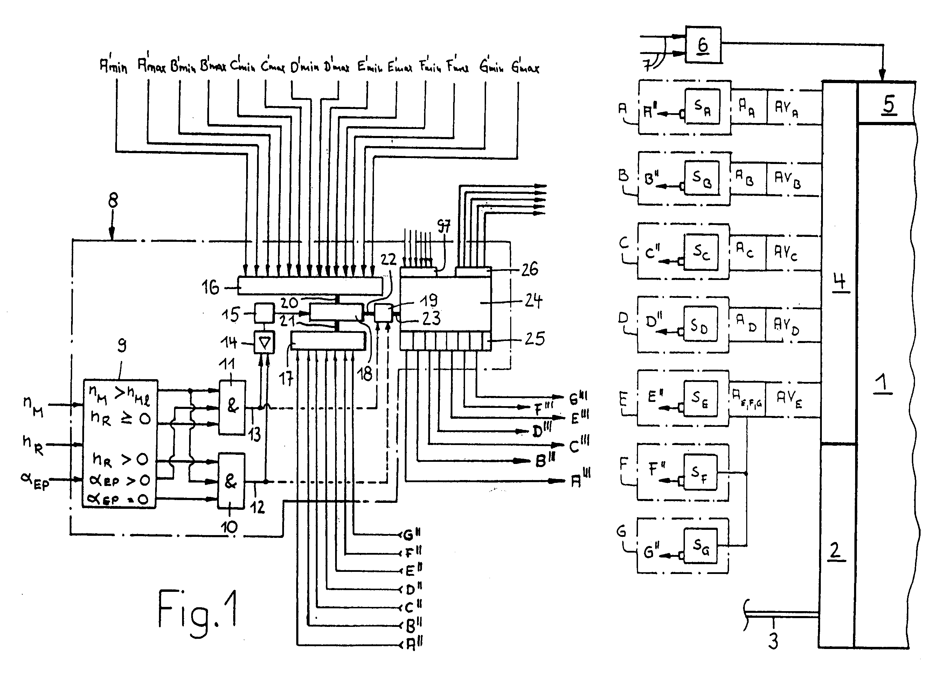

Wie schematisiert in Fig. 1 und besser im Detail anhand der Figuren 2 bis 15 ersichtlich, ist mittels der elektronischen Steuereinrichtung 8 aufgrund ihrer einzelnen Schaltungsorgane die Ladung bzw. Entladung folgender Speicher steuerbar, nämlich zum Beispiel

- des Kühlmittelkreislaufs als thermischem Speicher $S_A$ der Motorkühlanlage A durch Zuschaltung des Lüfters $A_A$ über eine Antriebsverbindung $AV_A$,
- eines Druckmittelspeichers $S_B$ der Lenkhilfeanlage B des Fahrzeugs durch Zuschaltung einer Lenkhilfepumpe $A_B$ über eine Antriebsverbindung $AV_B$,
- einer Batterie als Speicher $S_C$ der elektrischen Anlage C des Kraftfahrzeugs durch Zuschaltung eines Generators $A_C$ über eine Antriebsverbindung $AV_C$,
- eines Hochdruckspeichers $S_D$ einer Bremsenergierückgewinnungseinrichtung D des Kraftfahrzeugs durch Zuschaltung eines Hydrostaten $A_D$ über eine Antriebsverbindung $AV_D$,

- eines Druckluftspeichers $S_E$ der Fahrzeugbremsanlage E durch Zuschaltung eines Luftpressers $A_E$ über eine Antriebsverbindung $AV_E$,
- eines Druckluftspeichers $S_F$ einer druckluftbetätigbaren Arbeitseinrichtung F, z.B. Türöffnungs- bzw. -schließmechanismus eines Omnibusses, durch Zuschaltung eines Luftpressers $A_F$ über eine Antriebsverbindung $AV_F$, und
- eines Druckluftspeichers $S_G$ einer Zusatzluftversorgungsanlage G für bestimmte Aggregate des Kraftfahrzeuges durch Zuschaltung eines Luftpressers $A_G$ über eine Antriebsverbindung $AV_G$.

In Fig. 2 ist stark schematisiert die Motorkühlanlage A mit dem Kühlmittelkreislauf $S_A$ und den darin eingeschalteten Kühler 27 dargestellt. In Figuren 3 bis 6 ist der dem Lüfter 27 zugehörige, die notwendige Kühlung erzeugende Lüfter $A_A$ in Verbindung mit verschiedenen Antriebsverbindungen $AV_A$ dargestellt. Im Fall von Fig. 3 ist die Antriebsverbindung $AV_A$ für den Lüfter $A_A$ durch eine an einem Nebenabtrieb 4 der Brennkraftmaschine 1 angeschlossene Welle 28 gegeben, in die eine Schaltkupplung 29 eingeschaltet ist, welche durch von der Funktionssteuerschaltung 24 ausgegebene Steuerbefehle $A'''$ betätigbar ist.

Gemäß Fig. 4 ist die Antriebsverbindung $AV_A$ für den Lüfter $A_A$ durch ein einerseits mit letzterem, andererseits mit einem Nebenabtrieb 4 der Brennkraftmaschine 1 verbundendes, stufenlos oder stufig übersetzendes Getriebe 30 gebildet, dessen Ausgangsdrehzahl zwischen Null und einem Maximum einstellbar ist durch entsprechende, von der Funktionssteuerschaltung 24 ausgegebene Steuerbefehle $A'''$.

Bei der Ausführungsform nach Fig. 5 ist die Antriebsverbindung $AV_A$ für den Lüfter $A_A$ durch zwei hydraulisch gekoppelte, nicht verstellbare Hydrostatmaschinen 31A, 31B gebildet, von denen die eine (31A) über eine Welle 32 mit Schaltkupplung 33 an einem Nebenabtrieb 4 der Brennkraftmaschine 1 und die andere (31B) am Lüfter $A_B$ angeschlossen ist. Die Schaltkupplung 33 wird durch von der Funktionssteuerschaltung 24 ausgegebene Steuerbefehle $A'''$ betätigt.

Beim Ausführungsbeispiel gemäß Fig. 6 ist die Antriebsverbindung $AV_A$ für den Lüfter $A_A$ durch zwei hydraulisch gekoppelte, jeweils zwischen einer Null- und Maximalförderleistung verstellbare Hydrostatmaschinen 34A, 34B gebildet, von denen die eine (34A) an einem Nebentrieb 4 der Brennkraftmaschine 1 und die andere (34B) am Lüfter $A_A$ angeschlossen ist und deren Verstellung durch von der Funktionssteuerschaltung 24 ausgegebene Steuerbefehle $A_a'''$, $A_b'''$ erfolgt.

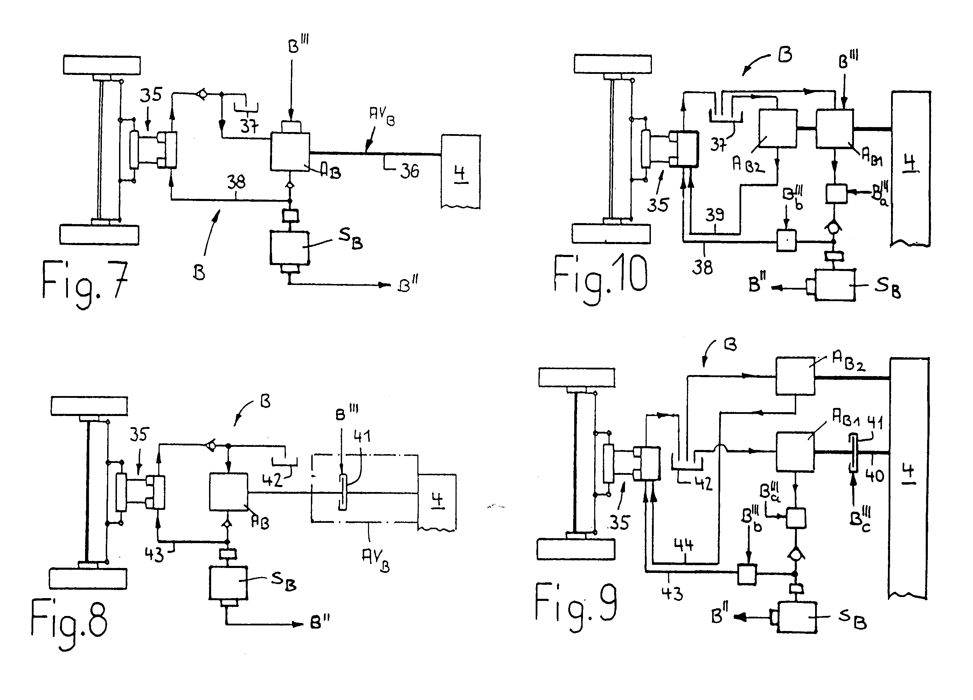

In den Figuren 7 bis 10 sind verschiedene Ausführungsmöglichkeiten in Verbindung mit Lenkhilfeanlagen D des Kraftfahrzeuges aufgezeigt. Dabei ist in diesen vier Figuren jener hydraulische Steuerungsteil, der die Lenkbewegung kräftemäßig unterstützt, generell mit 35 bezeichnet. Dieser Steuerungsteil 35 kann einen üblichen, ansich bekannten Aufbau haben.

Gemäß Fig. 7 ist die Antriebsverbindung $AV_B$ zwischen einer von Null- bis Maximalförderleistung verstellbaren Lenkhilfepumpe $A_B$ und einem Nebenabtrieb 4 der Brennkraftmaschine durch eine Welle 36 gebildet. Die Lenkhilfepumpe $A_B$ erhält ihre Verstellbefehle $B'''$ von der Funktionssteuerschaltung 24 und fördert Hydrauliköl aus einem Tank 37 in den angeschlossenen Druckmittelspeicher $S_E$ und/oder den Lenkhilfekreis 38.

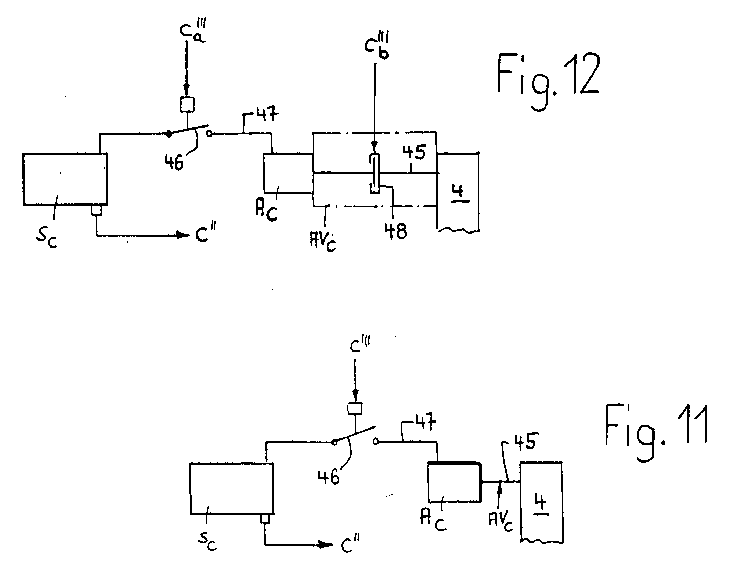

Die Lösung gemäß Fig. 10 baut auf jener gemäß Fig. 7 auf, d.h., es ist auch dort eine zwischen Null- und Maximalförderleistung verstellbare Lenkhilfepumpe $A_{B1}$ vorgesehen, die über eine Welle 36 direkt an einem Nebenabtrieb 4 der Brennkraftmaschine angeschlossen ist, außerdem ihre Verstellbefehle $B'''$ ebenfalls von der Funktionssteuerschaltung 24 erhält und Hydrauliköl aus einem Tank 37 in den angeschlossenen Druckmittelspeicher $S_B$ und/oder den Lenkhilfekreis 38 fördert. Im Gegensatz zur Lösung gemäß Fig. 7 ist jedoch bei der Ausführungsform gemäß Fig. 10 an der selben Welle 36, von der die Lenkhilfepumpe $A_{B1}$ angetrieben ist, eine weitere, nicht verstellbare Lenkhilfepumpe $A_{B2}$ angeschlossen, die einen angeschlossenen Lenkhilfekreis 39 direkt und ständig mit einer Grundleistung versorgt. Zur Beherrschung der Lade- und Entladevorgänge des Speichers $S_B$ können, wie in Fig. 10 gezeigt, sowohl bei diesem Ausführungsbeispiel als auch jenem gemäß Fig. 7, sowohl in der Speiseleitung zum Speicher $S_B$, als auch in den hiervon abzweigenden Lenkhilfekreis 38 Absperrventile eingeschaltet sein, die ebenfalls von der Funktionssteuerschaltung 24 durch über den Verstärkerblock 26 ausgegebene Signale $B_a'''$, $B_b'''$ steuerbar sind.

Im Fall des Ausführungsbeispiels gemäß Fig. 8 ist die Antriebsverbindung $AV_B$ zwischen einer nicht verstellbaren Lenkhilfepumpe $A_B$ und einem Nebenabtrieb 4 der Brennkraftmaschine 1 durch eine Welle 40 mit Schaltkupplung 41 gebildet, die ihre Schaltbefehle $B'''$ von der Funktionssteuerschaltung 24 erhält. Diese Lenkhilfepumpe $A_B$ fördert Hydrauliköl aus einem Tank 42 in den angeschlossenen Druckmittelspeicher $S_B$ und/oder den Lenkhilfesteuerkreis 43.

Die Ausführungsform gemäß Fig. 9 baut auf jener gemäß Fig. 8 auf, d.h., es ist auch bei der Ausführungsform gemäß Fig. 9 eine nicht verstellbare Lenkhilfepumpe $A_{B1}$ über eine Welle 40 mit Schaltkupplung 41 an einem Nebenabtrieb 4 der Brennkraftmaschine angeschlossen. Die Schaltkupplung 41 erhält ihre Schaltbefehle $B'''$ von der Funktionssteuerschaltung 24.

Auch diese Lenkhilfepumpe $A_{B1}$ fördert Hydrauliköl aus einem Tank 42 in den angeschlossenen Druckmittelspeicher $S_B$ und/oder in den Lenkhilfesteuerkreis 43. Darüber hinaus ist der besagten Lenkhilfepumpe $A_{B1}$ eine zweite, ebenfalls an einem Nebenabtrieb 4 der Brennkraftmaschine 1 direkt angeschlossene Lenkhilfepumpe $A_{B2}$ parallel geschaltet. Diese zweite Lenkhilfepumpe $A_{B2}$ versorgt direkt und ständig einen daran angeschlossenen Lenkhilfesteuerkreis 44 mit einer Grundleistung. Auch in diesem Fall können gleichsam, wie im Fall gemäß Fig. 10 dargestellt, in die Zuleitung zwischen der Lenkhilfepumpe $A_{B1}$ und dem Speicher $S_B$ sowie in dem hiervon abführenden Lenkhilfesteuerkreis 43 Absperrventile eingeschaltet sein, die durch von der Funktionssteuerschaltung 24 über deren Ausgangsverstärkerblock 26 ausgegebene Steuerbefehle $B_a''$, $B_b'''$ betätigbar sind.

In jedem der Ausführungsbeispiele gemäß Fig. 7 bis 10 ist dem Speicher $S_B$ ein steuerbares Absperrventil vorgeschaltet, das unabhängig vom Speicherdruck sicherstellt, daß die Lenkhilfeeinrichtung immer mit Öl ausreichenden Drucks versorgt ist.

In den Figuren 11 und 12 ist eine Einrichtung zur Ladung der elektrischen Batterie $S_C$ des Kraftfahrzeuges aufgezeigt.

Gemäß Fig. 11 ist der zur Ladung der Batterie $S_C$ dienende Generator $A_D$ über eine Welle 45 an einem Nebenabtrieb 4 der Brennkraftmaschine 1 angeschlossen sowie über eine durch einen Schalter 46 schließ- bzw. unterbrechbare Ladeleitung 47 mit der Batterie verbunden. Das Laden der Batterie $S_C$ wird durch eine entsprechende Betätigung des Schalters 46 bewirkende, von der Funktionssteuerschaltung 24 ausgegebene Befehle $C'''$ gesteuert.

Im Unterschied zur Lösung gemäß Fig. 11 ist bei der Ausführungsform gemäß Fig. 12 in die Welle 45 zwischen Generator $A_C$ und Nebenabtrieb 4 eine Schaltkupplung 48 eingeschaltet, mit der zwecks Vermeidung unnötiger Schleppverluste der Antrieb des Generators $A_C$ unterbrechbar ist. Der hierfür erforderliche Steuerbefehl $C_b'''$ wird ebenso wie der Befehl $C_a'''$ zum Betätigen des Schalters 46 von der Funktionssteuerschaltung 24 ausgegeben, nämlich einer über den Ausgangsverstärkerblock 25 und einer über den Ausgangsverstärkerblock 26.

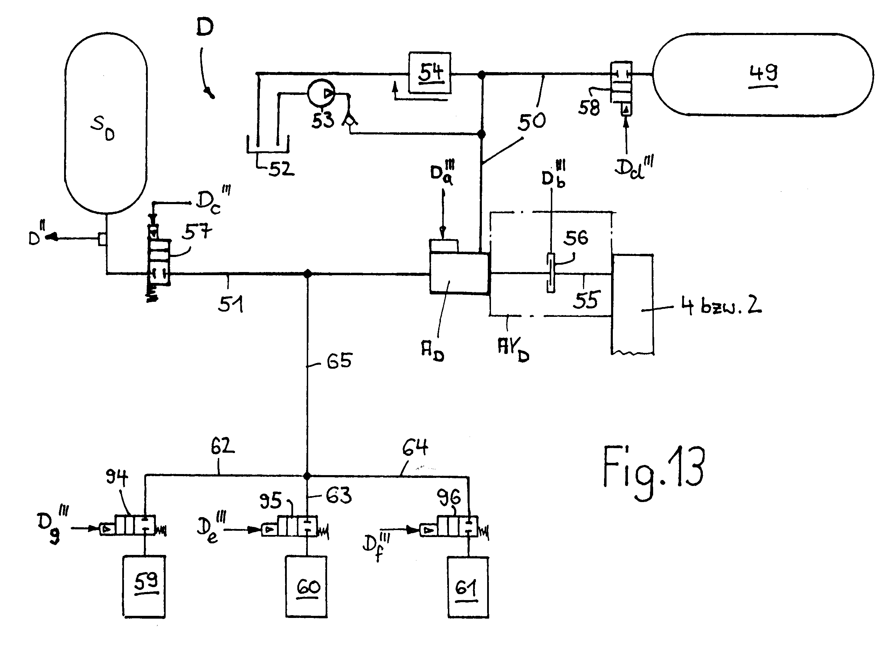

In Fig. 13 ist eine insgesamt mit D bezeichnete Bremsenergierückgewinnungseinrichtung des Kraftfahrzeugs dargestellt. Diese besteht im wesentlichen aus einem Hochdruckspeicher $S_D$ und einem Niederdruckspeicher 49 sowie einem verstellbaren Hydrostaten $A_D$. Der Niederdruckspeicher 49 ist über eine Leitung 50 und der Hochdruckspeicher über eine Leitung 51 am Hydrostat $A_D$ angeschlossen. Zur Grundversorgung des Systems mit Hydrauliköl dient eine aus einem Tank 52 saugende Förderpumpe 53, die Hydrauliköl in einer bestimmten Menge und mit einem bestimmten Druck in das System einspeist. Der Grenzdruck ist über ein Niederdruckbegrenzungsventil 54 eingestellt. Der Hydrostat $A_D$ ist über eine antriebsverbindung $AV_D$, gebildet durch eine Welle 55 mit Schaltkupplung 56, an einem Nebenabtrieb 4 der Brennkraftmaschine 1 oder des Getriebes 2 anschließbar. Die Schaltkupplung 56 ist durch von der Funktionssteuerschaltung 24 ausgegebene Schaltbefehle $D_b''$ betätigbar. Die Verstellung des Hydrostaten $A_D$ erfolgt ebenfalls über von der Funktionssteuerschaltung ausgegebene Stellbefehle $D_a'''$. Das Vorsehen der Schaltkupplung 56 erweist sich insofern als zweckmäßig, weil damit das gesamte Bremsenergierückgewinnungssystem als autarkes System gegeben ist, denn bei geöffneter Schaltkupplung ist der Hydrostat $A_D$ vom Antrieb abgekuppelt und verursacht somit im normalen Fahrzeugbetrieb keine Schleppverluste. Wenn die Schaltkupplung 56 geschlossen ist, dann wird der Hydrostat $A_D$ vom Antriebsstrang 3 her angetrieben und arbeitet dabei als Pumpe, wobei der Hochdruckspeicher $S_D$ mit Hydrauliköl aus dem Niederdruckspeicher 49 geladen wird. Diese Ladung entspricht beim Bremsen des Fahrzeuges der entstehenden Bremsenergie. Diese bei einer Füllung von ca. 50 - 100 Liter etwa bis zu 400 bar tragende Ladung des Hochdruckspeichers $S_D$ kann nun bei gesteuerter Entladung desselben über den dann als Motor wirkenden Hydrostaten $A_D$ bei geschlossener Schaltkupplung 56 an den Achsantriebsstrang 3 hindurchgeleitet werden. Zur sicheren Beherrschung dieser Lade- und Entladevorgänge bzw. zur sicheren Absperrung der beiden Speicher $S_D$, 49 sind diesen jeweils in der Zuleitung 50 bzw. 51 Absperrventile 57 bzw. 58 zugeordnet, bei denen es sich vorzugsweise um Cartridge-Ventile handelt, deren Betätigung durch von der Funktionssteuerschaltung 24 ausgegebene Befehle $D_c''$ bzw. $D_d'''$ gesteuert wird. Darüber hinaus kann dem Hydrostaten $A_D$ eine weitere Funktion zukommen, die bauteilmäßig ebenfalls aus Fig. 13 ersichtlich ist. Dabei können am Hydrostaten $A_D$ außer den beiden Speichern $S_D$ bzw. 49 auch eine oder mehrere Arbeitseinrichtungen 59, 60, 61 mit hydraulisch betätigbaren Organen angeschlossen sein. Bei letzteren kann es sich um hydraulisch betätigte Hubzylinder für Aufbauten, Hubzylinder für Ladeplattform, Hubzylinder für hydraulische Stützen, hydraulisch betätigte Pressen und Huborgane (Müllsammelfahrzeug), ausfahrbare Leitern (Feuerwehrfahrzeug) oder dergleichen handeln. Die Zuleitungen 62, 63, 64 zu diesen Arbeitseinrichtungen 59, 60, 61 zweigen von einer Sammelzuleitung 65 ab, die an der Leitung 51 oder an einem separaten Ausgang des Hydrostaten $A_D$ angeschlossen ist. Die besagten Zuleitungen 62, 62, 64 sind jeweils durch 2/1-Wege-Ventile, insbesondere Cartridge-Ventile absperrbar, die ihre Schaltbefehle $D_e'''$, $D_f'''$ und $D_g'''$ ebenfalls von der Funktionssteuerschaltung 24 erhalten. Die Arbeitseinrichtungen 59, 60, 61 sind somit wahlweise durch eine Entladung des vorher aufgeladenen Hochdruckspeichers $S_D$ oder - wenn letzterer bereits voll ist - direkt vom Hydrostaten $A_D$ her mit Druckmittel versorgbar.

In Fig. 14 sind die Zusammenhänge in Verbindung mit den Anlagen E, F, G dargestellt. Mit $F_E$ ist dabei der aus einem großen Behälter, aus Sicherheitsgründen jedoch vorzugsweise mehreren parallel geschalteten Behältern bestehende Druckluftspeicher der Fahrzeugbremsanlage E bezeichnet. Der zur Versorgung des Druckluftspeichers $S_E$ dienende Luftpresser $A_E$ steht über eine Welle 66 mit eingeschalteter Schaltkupplung 67 mit einem Nebenabtrieb 4 der Brennkraftmaschine 1 in Verbindung, wobei der Luftpresser bei Nichtbedarf zwecks Vermeidung von Schleppverlusten durch von der Funktionssteuerschaltung 24 ausgegeben Befehle $E''$ vom Nebenabtrieb 4 abkuppelbar ist. Alternativ zu der in der Fig. 14 dargestellten Antriebsverbindung $AV_E$ kann, wie aus Fig. 15 ersichtlich, zwischen der Schaltkupplung 67 und dem Luftpresser $A_E$ ein drehzahlregelbares, stufenlos oder stufig übrsetzendes Getriebe 68 eingeschaltet sein. In diesem Fall wird die Betätigung der Schaltkupplung 67 durch einen Steuerbefehl $E_a''$ sowie die Verstellung des Getriebes 68 durch Befehle $E_b''$, jeweils ausgegeben von der Funktionssteuerschaltung 24, gesteuert. Die Absperrung des Druckluftspeichers $S_E$ erfolgt über 2/1-Wege-Absperrventile 69 bzw. 70, die ebenfalls durch entsprechende Steuerbefehle $E_c''$ bzw. $E_d''$ von der Funktionssteuerschaltung 24 her gesteuert werden. Das Ventil 69 ist in die Ladeleitung 71 und das Ventil 70 in die zu den Bremskreisen führende Druckspeiseleitung 72 eingeschaltet.

Mit $S_F$ ist ein weiterer Druckluftspeicher bezeichnet, der zur Versorgung von druckluftbetätigbaren Arbeitseinrichtungen F, wie beispielsweise Türöffnungs- und -schließmechanismen bei Omnibussen oder dergleichen, dient. Dieser Druckluftspeicher $S_F$ könnte nun von einem Luftpresser $A_F$ mit Antriebsverbindung $AV_F$ mit Druckluft versorgt werden, in einer Anordnung der Aggregate, die identisch mit jener Versorgung für den Druckluftspeicher $S_E$ ist. Aus Kostengründen wird man jedoch darauf verzichten und den Luftpresser $A_E$ leistungsmäßig so auslegen, daß er gegebenenfalls beide Druckluftspeicher $S_E$ und $S_F$ mit Druckluft in ausreichendem Maße versorgen kann. In diesem dargestellten Fall zweigt eine Ladeleitung 73 von der Ladeleitung 71 ab und führt zum Druckluftspeicher $S_F$. In die Ladeleitung 73 ist ein 2/1-Wege-Absperrventil 74 eingeschaltet. Im dargestellten Ausführungsfall dient der Druckluftspeicher $S_F$ auch zur Versorgung eines Brenners 75 mit Verbrennungsluft über eine Zufuhrleitung 76. Der Brenner 75 wird außerdem aus einem Brennstoffvorratsbehälter 77 über eine Förderpumpe 78 mit Brennstoff versorgt und zwar zur Erzeugung von Rauchgas, das aufgrund seines Wärmeenergeinhalts zur Regenerierung eines in die Abgasleitung 79 der Brennkraftmaschine eingeschalteten Partikelfilters 80 dient und diesem über einen Speisekanal 81 zugeführt wird.

Am Ausgang des Druckluftspeichers $S_F$ ist einerseits die Zufuhrleitung 76 zum Brenner 75 und andererseits eine zu anderen mit Druckluft zu versorgenden Einrichtungen führende Versorgungsleitung angeschlossen. In jede der Leitungen 76 und 82 ist ein 2/1-Wege-Absperrventil 83 bzw. 84 eingeschaltet. Die Betätigung der 2/1-Wege-Absperrventile 74, 83 und 84 erfolgt ebenfalls durch von der Funktionssteuerschaltung 24 ausgegebene Steuerbefehle $E_e'''$, $E_f'''$ und $E_i'''$.

Mit $S_G$ ist ein weiterer Druckluftspeicher bezeichnet, der zur Zusatzluftversorgung der Brennkraftmaschine 1 dient. Auch dieser Druckluftspeicher $S_G$ könnte durch einen Luftpresser $A_G$ über eine Antriebsverbindung $AV_G$ mit Druckluft versorgt werden, welche Organe identisch mit jenen zur Versorgung des Druckluftspeichers $S_E$ sind. Aus Kosten- und Rationalitätsgründen wird, wie in Fig. 14 gezeigt, jedoch auch hierbei der Druckluftspeicher $S_G$ von einem auch den beiden anderen Druckluftspeichern $S_E$ und $S_F$ gemeinsame Luftpresser $A_{E,F,G}$ über eine entsprechende Antriebsverbindung $AV_{E,F,G}$ - wie in Fig. 14 bzw. Fig. 15 dargestellt - mit Druckluft versorgt, und zwar über eine von der Ladeleitung 71 abzweigende Ladeleitung 85. In letztere ist ein 2/1-Wege-Absperrventil 86 eingeschaltet. Die Ausgangsleitung 87 des Druckluftspeichers $S_G$ mündet in einen Saugkanal 88 der Brennkraftmaschine 1, der normalerweise vom Verdichter 89 eines des weiteren aus einer Turbine 90 bestehenden Abgasturboladers mit entsprechend komprimierter Luft versorgt wird. Die über die Leitung 87 einspeisbare Zusatzluft dient insbesondere zum raschen Beschleunigen der Brennkraftmaschine aus dem Teillastbereich heraus. In die Ausgangsleitung 87 ist ebenfalls ein 2/1-Wege-Absperrventil 91 eingeschaltet. Beide 2/1-Wege-Absperrventile 86 und 91, die zur Absperrung des Druckluftspeichers $S_G$ dienen, sind ebenfalls durch von der Funktionssteuerschaltung 24 ausgegebene Befehle $E_g'''$ bzw. $E_h'''$ betätigbar. Darüber hinaus ist am Ausgang des Druckluftspeichers $S_G$ noch eine Abzweigleitung 92 angeschlossen, die über ein Wechselventil 93 an jenem strömungsmäßig vor dem 2/1-Wege-Absperrventil 84 liegenden Teil der Speiseleitung 82 angeschlossen ist. Hierdurch ist es möglich, daß die Arbeitseinrichtungen F sowohl vom Druckluftspeicher $S_G$ als auch vom Druckluftspeicher $F_F$ mit Druckluft versorgbar sind.

Wie aus Fig. 14 ersichtlich, ist - soweit möglich und aus Sicherheitsgründen zulässig - eine Anzahl von die Ladung der Speicher bewirkender Arbeitsmaschinen zu einer entsprechend leistungsstärkeren Arbeitsmaschine zusammengefaßt. In gleichem Sinne können auch eine Anzahl kleinerer, mit gleichem Medium zu ladender Speicher zu einem entsprechend volumenmäßig größeren Arbeitsspeicher zusammengefaßt werden, soweit dies zweckmäßig und aus Sicherheitsgründen zulässig ist. So wäre es beispielsweise durchaus möglich, die Speicher $S_F$ und $S_G$ in einem einzigen, entsprechend größeren Speicher zusammenzufassen. Insbesondere die Reduzierung der Antriebsaggregate und zugehörigen Antriebsverbindungen auf ein notwendiges Minimum wirkt letztendlich auch auf die Anzahl der notwendigen Nebenabtriebe 4 zurück. Insgesamt sollte bei der Konzeption der Nebenabtriebe, der Antriebsaggregate und der Antriebsverbindungen trotz aller Vereinfachung auf einige wenige Aggregate darauf geachtet werden, daß nur ein Teil der Aggregate immer mit der Brennkraftmaschine 1 antriebsmäßig in Verbindung steht und die anderen Aggregate, um Schleppverluste zu vermeiden, bzw. zu minimieren, vom Antrieb abschaltbar sind.

Falls das der Brennkraftmaschine 1 nachgeordnete Getriebe 2 als automatisches Getriebe ausgebildet ist, dann kann dieses durch einen Regeleingriff, beispielsweise von der Funktionssteuerschaltung 24 her, so eingestellt werden, daß es während des Schubbetriebes über eine größere Übersetzung mit dem Achsantriebsstrang 3 verbunden ist als im Zugbetrieb. Dadurch sind im Schubbetrieb für den Antrieb der besagten Antriebsaggregate $A_A$, $A_B$, $A_C$, $A_D$, $A_E$, $A_F$, $A_C$ günstigere Antriebsverhältnisse gegeben.

Wie bereits weiter vorn erläutert, erfolgt die Zuschaltung der einzelnen Antriebsaggregate für Ladung bzw. Entladung des zugehörigen Speichers aufgrund von Versorungsnotwendigkeiten der letzteren und aus Sicherheitserfordernissen, was rangfolgemäßig in der Prioritätenwahlschaltung 19 festgelegt ist. Diese Rangfolge kann sich wie folgt darstellen:

Priorität 1    hat die Ladung des Druckluftspeichers $S_E$, damit immer ein ausreichend hoher Bremsdruck zur Verfügung steht.

Priorität 2    hat das Lenkhilfesystem B, um eine leichte Handhabung des Kraftfahrzeuges sicherzustellen.

Priorität 3    hat die Ladung der Batterie $S_C$.

Priorität 4    hat die Ladung des Druckluftspeichers $S_F$.

Priorität 5    hat die Ladung des Druckluftspeichers $S_G$.

Priorität 6    hat die Kühlanlage A.

Priorität 7    hat die Ladung des Speichers $S_D$ der Bremsenergierückgewinnungseinrichtung D des Kraftfahrzeuges.

Entsprechend dieser Rangfolge sind die besagten Speicher ladbar bzw. entladbar.

Es bleibt anzumerken, daß die Funktion der hydraulisch angetriebenen Nebenverbraucher auch bei entladenen bzw. teilentladenen Speichern sichergestellt ist.

Es kann bei bestimmten Kraftfahrzeug-Arten, beispielsweise bei Kraftfahrzeugen mit stark instationärem Betrieb, aber trotzdem auftretenden Phasen längeren quasistationären Betriebes, wie Müllsammelfahrzeugen, Feuerwehreinsatzfahrzeugen oder anderen mit hydraulischen bzw. pneumatischen Arbeitseinrichtungen versehenen Fahrzeugen, zweckmäßig sein, eine weitere Speicher-Laderangfolge vorzusehen. Es kann unter Umständen auch zweckmäßig sein, eine bestimmte Speicher-Laderangfolge für den Schubbetrieb und eine andere Speicher-Laderangfolge für den Zugbetrieb vorzusehen. Für diesen Fall wären in der Prioritätenwahlschaltung zwei verschiedene Speicher-Laderangfolgen eingeschrieben, nämlich eine für Schubbetrieb und eine für Zugbetrieb. Zwischen beiden Speicher-Laderangfolgen ist die Prioritätenwahlschaltung 19 umschaltbar, wobei diese Umschaltung von der einen auf die andere Speicher-Laderangfolge in Abhängigkeit von den die Betriebsartwechsel markierenden Signalen erfolgt, bei denen es sich beispielsweise um die Ausgangssignale der beiden UND-Glieder 10, 11 - siehe Figur 1 - handeln kann, die - wie dort durch gestrichelte Linien dargestellt - der Prioritätenwahlschaltung 19 zugeleitet werden und in dieser dann den entsprechenden Umschaltvorgang bewirken.

**Patentansprüche**

1. Kraftfahrzeug, insbesondere Lkw oder Omnibus, mit wenigstens einer Brenn-kraftmaschine (1) mit nachgeordnetem Getriebe (2), an dessen Abtrieb (3) ein Achsantriebsstrang und über Nebenabtriebe (4) bedarfsweise zuschaltbare Antriebsaggregate ($A_A$, $A_B$, $A_C$, $A_D$, $A_E$, $_F$, $_G$), die zum Betrieb von Nebenverbrauchern (A, B, C, D, E, F, G) oder zur Ladung von Speichern ($S_A$, $S_B$, $S_C$, $S_D$, $S_E$, $S_F$, $S_G$) dieser Nebenverbraucher notwendig sind, angeschlossen sind, und mit einer Einrichtung zur Schubzuschaltung, mit der nach erkanntem Wechsel von Zug- auf Schubbetrieb eine gezielte Zuschaltung der besagten Antriebsaggregate an den Antriebsstrang des Fahrzeugs und danach deren Betrieb im Sinne einer geregelten Ladung der Speicher steuerbar ist, wofür eine elektronische Steuereinrichtung (8) vorgesehen ist, die

a) aufgrund ihr zugeführter Betriebs-Istwertsignale der Motordrehzahl ($n_M$), Fahrgeschwindigkeit ($n_R$) und Einspritzpumpen- bzw. Fahrpedaleinstellung ($\alpha_{EP}$) mittels interner Schaltungsmittel (9, 10, 11) dann, wenn $n_R > 0$ und $\alpha_{EP} = 0$ und $n_M > n_{M1}$ - (Leerlaufdrehzahl) einen Wechsel von Zug- auf Schubbetrieb, außerdem dann, wenn $n_R \geq 0$ und $\alpha_{EP} > 0$ und $n_M > n_{M1}$ einen Wechsel von Schub- auf Zugbetrieb jeweils durch logische Verknüpfung dieser drei Istwerte erfaßt, und die

b) bei erkanntem Schubbetrieb - gegebenenfalls nach definierter Verzögerungszeit - dem Antriebsstrang (3, 1, 4) gezielt eines oder mehrere der Antriebsaggregate ($A_A$, $A_B$, $A_C$, $A_D$, $A_{E, F, G}$) der Nebenverbraucher (A, B, C, D, E, F, G) in einer bestimmten, in einer Prioritätenwahlschaltung (19) aufgrund von Versorgungsnotwendigkeiten und Sicherheitserfordernissen festgelegten Rangfolge sowie außerdem abhängig von einem durch Vergleich vorgegebener Sollwerte mit ermittelten Istwerten signalisierten Ladebedarf der Speicher ($S_A$, $S_B$, $S_C$, $S_D$, $S_E$, $S_F$, $S_G$) zuschaltet, und die

c) bei erkanntem Wechsel von Schub- auf Zugbetrieb mittels der Prioritätenwahlschaltung (19) ebenfalls in einer bestimmten aufgrund von Versorgungsnotwendigkeiten und Sicherheitserfordernissen festgelegten Rangfolge

- das bzw. die Antriebsaggregate bei noch weiters notwendigem Speicher-Ladebedarf wie vorher im Schubbetrieb weiterhin in Antriebsverbindung mit dem Antrieb hält, bzw.
- bei vorhandenem Ladebedarf weiterer Speicher das bzw. die zugehörige(n) Antriebsaggregat(e) ebenfalls der Brennkraftmaschine (1) zuschaltet,
- und die

d) bei erkannter ausreichender Füllung jedes der Speicher dessen weitere Ladung sowohl im Schub-als auch Zugbetrieb unterbindet.

2. Kraftfahrzeug nach Anspruch 1, dadurch gekennzeichnet, daß mittels der Steuereinrichtung (8) die Ladung bzw. Entladung folgender Speicher steuerbar ist, nämlich

- des Kühlmittelkreislaufs als thermischem Speicher ($S_A$) der Motorkühlanlage (A)

durch Zuschaltung des Lüfters ($A_A$) über eine Antriebsverbindung ($AV_A$),
- eines Druckmittelspeichers ($S_B$) der Lenkhilfeanlage (B) durch Zuschaltung einer Lenkhilfepumpe ($A_B$) über eine Antriebsverbindung ($AV_B$),
- einer Batterie als Speicher ($S_C$) der elektrischen Anlage (C) durch Zuschaltung eines Generators ($A_C$) über eine Antriebsverbindung ($AV_C$),
- eines Hochdruckspeichers ($S_D$) einer Bremsenergierückgewinnungseinrichtung (D) durch Zuschaltung eines Hydrostaten ($A_D$) über eine Antriebsverbindung ($AV_D$),
- eines Druckluftspeichers ($S_E$) der Fahrzeugbremsanlage (E) durch Zuschaltung eines Luftpresser ($A_E$) über eine Antriebsverbindung ($AV_E$),
- eines Druckluftspeichers ($S_F$) einer druckluftbetätigbaren Arbeitseinrichtung (F), z.B. Türöffnungs- bzw. -schließmechanismus, durch Zuschaltung eines Luftpressers ($A_F$) über eine Antriebsverbindung ($AV_F$),
- eines Druckluftspeichers ($S_G$) einer Zusatzluftversorgungsanlage (G) durch Zuschaltung eines Luftpressers ($A_C$) über eine Antriebsverbindung ($AV_G$).

3. Kraftfahrzeug nach Anspruch 2, dadurch gekennzeichnet, daß - soweit möglich - eine Anzahl kleinerer, mit gleichem Medium zu ladender Speicher zu einem entsprechend volumenmäßig größeren Arbeitsspeicher zusammengefaßt und ebenso - soweit möglich - eine Anzahl von Arbeitsmaschinen zu einer leistungsstärkeren Arbeitsmaschine zusammengefaßt sind.

4. Kraftfahrzeug nach Anspruch 1, dadurch gekennzeichnet, daß die elektronische Steuereinrichtung (8) zum Erkennen des Schubbetriebes und Zugbetriebes der Brennkraftmaschine (1) einen mit den Istwerten der Motordrehzahl ($n_M$), der von einer Raddrehzahl abgeleiteten Fahrgeschwindigkeit ($n_R$) und der Einspritzpumpen- bzw. Fahrpedaleinstellung ($\alpha_{EP}$) gespeisten Vergleicher (9) aufweist, der,

a) wenn $n_R > 0$ und $\alpha_{EP} = 0$ und $n_M > n_{M1}$ - (Leerlaufdrehzahl) ein erstes UND-Glied (10) durchschaltet, wobei dessen Ausgangssignal (12) den Schubbetrieb signalisiert, bzw.
b) wenn $n_R \geq 0$ und $\alpha_{EP} > 0$ und $n_M > n_{M1}$ ein zweites UND-Glied (11) durchschaltet, dessen Ausgangssignal (13) den Zugbetrieb signalisiert.

5. Kraftfahrzeug nach Anspruch 4, dadurch gekennzeichnet, daß die Ausgänge (12, 13) der beiden UND-Glieder (10,11) direkt bzw. über ein ODER-Glied mit dem Eingang eines Signalverstärkers (14) verbunden sind, dem ein Verzögerungsglied (15) schaltungsmäßig nachgeordnet ist, das die Weiterleitung des verstärkten Signals um eine eingestellte Zeitspanne verzögert und mit dessen Ausgangssignal die Speicherlade-Steuerungsfunktionen der Steuereinrichtung (8) über die anderen Schaltungsorgane derselben ausgelöst werden.

6. Kraftfahrzeug nach einem der Ansprüche 1, 4 und 5, dadurch gekennzeichnet, daß die elektronische Steuereinrichtung (8) einen Eingabespeicher (16) für die oberen und unteren Grenzwerte ($A'_{min}$, $A'_{max}$, $B'_{min}$, $B'_{max}$, $C'_{min}$, $C'_{max}$, $D'_{min}$, $D'_{max}$, $E'_{min}$, $E'_{max}$, $F'_{min}$, $F'_{max}$, $G'_{min}$, $G'_{max}$) als Sollwerte der Ladungen der Speicher ($S_A$, $S_B$, $S_C$, $S_D$, $S_E$, $S_F$, $S_G$) sowie einen Eingabespeicher (17) für die Istwerte ($A''$, $B''$, $C''$, $D''$, $E''$, $F''$, $G''$) der besagten Speicherladungen und einen Vergleicher (18) für die jeweiligen Soll- und Istwerte aufweist, der bei Unterschreiten eines Sollwertbereiches ein Anforderungssignal für Laden des zugehörigen Speichers und bei Erreichen bzw. Überschreiten des oberen Sollgrenzwertes ein Anforderungssignal für Abschalten der Ladung des zugehörigen Speichers abgibt.

7. Kraftfahrzeug nach einem der Ansprüche 1, 4, 5 und 6, dadurch gekennzeichnet, daß an die Prioritätenwahlschaltung (19) eine Funktionssteuerschaltung (24) angeschlossen ist, die über Ausgangsverstärker (25) Steuersignale ($A''$, $B''$, $C''$, $D''$, $E''$, $F''$, $G''$) abgibt, mit denen die Zuschaltung, der Betrieb und die Abschaltung der Ladeorgane ($A_A$, $A_B$, $A_C$, $A_D$, $A_E$, $A_F$, $A_C$) bzw. der zugehörigen Antriebsverbindungen ($AV_A$, $AV_B$, $AV_C$, $AV_D$, $AV_E$, $AV_F$, $AV_G$) an die bzw. der bzw. von der Brennkraftmaschine (1) gesteuert wird.

8. Kraftfahrzeug nach Anspruch 7, dadurch gekennzeichnet, daß die Funktionssteuerschaltung (24) über einen weiteren Ausgangsverstärkerblock (26) weitere Steuersignale für die Steuerung von Arbeitsfunktionen der zu betreibenden Anlagen (A, B, C, D, E, F, G) ausgibt.

9. Kraftfahrzeug nach Anspruch 2, dadurch gekennzeichnet, daß die Antriebsverbindung ($AV_A$) für den Lüfter ($A_A$) durch ein einerseits mit letzterem, andererseits mit einem Nebenabtrieb (4) der Brennkraftmaschine (1) verbundenes, stufenlos oder stufig betreibbares Getriebe (30) gebildet ist, dessen Ausgangsdrehzahl zwischen Null und einem Maximum regelbar ist durch entsprechende Steuerbefehle ($A'''$) der Funktionssteuerschaltung (24) (Fig. 4).

10. Kraftfahrzeug nach Anspruch 2, dadurch gekennzeichnet, daß die Antriebsverbindung ($AV_A$) für den Lüfter ($A_A$) durch eine an einem Nebenabtrieb (4) der Brennkraftmaschine (1) angeschlossene Welle (28) gegeben ist, in die eine Schaltkupplung (29) eingeschaltet ist, welche durch Steuerbefehle ($A'''$) der Funktionssteuerschaltung (24) betätigt wird (Fig. 3).

11. Kraftfahrzeug nach Anspruch 2, dadurch gekennzeichnet, daß die Antriebsverbindung ($AV_A$) für den Lüfter ($A_A$) durch eine über eine Welle (32) mit Schaltkupplung (33) an einem Nebenantrieb (4) der Brennkraftmaschine (1) angeschlossene, nicht verstellbare Hydromaschine (31 A) sowie eine weitere, hydraulisch mit dieser gekoppelte und mit der Welle des Lüfters ($A_A$) verbundene Hydromaschine (31 B) gebildet ist, wobei die Schaltkupplung (33) durch von der Funktionssteuerschaltung (24) ausgegebene Steuerbefehle ($A'''$) betätigt wird (Fig. 5).

12. Kraftfahrzeug nach Anspruch 2, dadurch gekennzeichnet, daß die Antriebsverbindung ($AV_A$) für den Lüfter ($A_A$) durch eine an einem Nebenabtrieb (4) der Brennkraftmaschine (1) angeschlossene, zwischen Null- und Maximalförderleistung verstellbare erste Hydromaschine (34 A) und eine weitere verstellbare, mit dieser hydraulisch gekoppelte sowie mit der Welle des Lüfters ($A_A$) verbundene Hydromaschine (34 B) gebildet ist, deren Verstellung durch von der Funktionssteuerschaltung (24) ausgegebene Steuerbefehle ($A_{a''}$, $A_b'''$) erfolgt (Fig. 6).

13. Kraftfahrzeug nach Anspruch 2, dadurch gekennzeichnet, daß die Antriebsverbindung ($AV_B$) zwischen einer nicht verstellbaren Lenkhilfepumpe ($A_B$, $A_{B1}$) und einem Nebenabtrieb (4) der Brennkraftmaschine (1) durch eine Welle (40) mit Schaltkupplung (41) gebildet ist, die ihre Schaltbefehle ($B'''$) von der Funktionssteuerschaltung (24) erhält, wobei diese Lenkhilfepumpe ($A_B$, $A_{B1}$) Hydrauliköl aus einem Tank (42) in den angeschlossenen Druckmittelspeicher ($S_B$) und/oder den Lenkhilfesteuerkreis (43) fördert (Fig. 8).

14. Kraftfahrzeug nach Anspruch 13, dadurch gekennzeichnet, daß der besagten Lenkhilfepumpe ($A_{B1}$) eine zweite, den angeschlossenen Lenkhilfesteuerkreis (44) direkt und ständig mit einer Grundleistung versorgende, an einem Nebenabtrieb (4) der Brennkraftmaschine (1) immer angeschlossene Lenkhilfepumpe ($A_{B2}$) parallel geschaltet ist (Fig. 9).

15. Kraftfahrzeug nach Anspruch 2, dadurch gekennzeichnet, daß eine zwischen Null- und Maximalförderleistung verstellbare Lenkhilfepumpe ($A_B$, $A_{B1}$) mit direkter Antriebsverbindung ($AV_B$) durch eine Welle (36) von einem Nebenabtrieb (4) der Brennkraftmaschine (1) vorgesehen ist, die ihre Verstellbefehle ($B'''$) von der Funktionssteuerschaltung (24) erhält und Hydrauliköl aus einem Tank (37) in den angeschlossenen Druckmittelspeicher ($S_B$) und/oder den Lenkhilfekreis (38) fördert (Fig. 7).

16. Kraftfahrzeug nach Anspruch 15, dadurch gekennzeichnet, daß an der selben Welle (36) wie die besagte Lenkhilfepumpe ($A_{B1}$) eine weitere, den angeschlossenen Lenkhilfekreis (39) direkt und ständig mit einer Grundleistung versorgende Lenkhilfepumpe ($A_{B2}$) angeschlossen ist (Fig. 7 und 10).

17. Kraftfahrzeug nach Anspruch 2, dadurch gekennzeichnet, daß der zur Ladung der Batterie ($S_C$) dienende Generator ($A_C$) über eine Welle (45) an einem Nebenabtrieb (4) der Brennkraftmaschine (1) angeschlossen ist sowie über eine durch einen Schalter (46) schließ- bzw. unterbrechbare Ladeleitung (47) mit der Batterie ($S_C$) in Verbindung steht, wobei das Laden der Batterie durch eine entsprechende Betätigung des Schalters (47) bewirkende Befehle ($C''$, $C_a'''$) der Funktionssteuerschaltung (24) gesteuert wird (Fig. 11).

18. Kraftfahrzeug nach Anspruch 17, dadurch gekennzeichnet, daß in die Welle (45) zwischen Generator ($A_C$) und Nebenabtrieb (4) eine Schaltkupplung (48) eingeschaltet ist, mit der zwecks Vermeidung unnötiger Schleppverluste der Antrieb des Generators ($A_C$) durch entsprechende Schaltbefehle ($C_b'''$) der Funktionssteuerschaltung (24) unterbrechbar ist (Fig. 11, 12).

19. Kraftfahrzeug nach Anspruch 2, dadurch gekennzeichnet, daß der Hochdruckspeicher ($S_D$) der Bremsenergierückgewinnungseinrichtung (D) von einem Niederdruckspeicher (49) aus mittels eines verstellbaren Hydrostaten ($A_D$) ladbar ist, der durch Steuerbefehle ($D_a''$) von der Funktionssteuereinrichtung (24) aus verstellbar und über eine Welle (55) mit einem Nebenabtrieb (4) der Brennkraftmaschine (1) oder des Getriebes (2) in Verbindung steht, in die eine durch Befehle ($D_b''$) der Funktionssteuerschaltung (24) betätigbare Schaltkupplung (56) eingeschaltet ist, mit der zwecks Vermeidung von Schleppverlusten der Hydrostat ($A_D$) bei Nichtbedarf vom Nebenabtrieb (4) abkuppelbar ist (Fig. 13).

20. Kraftfahrzeug nach Anspruch 19, dadurch gekennzeichnet, daß am Hydrostaten ($A_D$) außer den beiden Speichern ($S_D$, 49) auch eine oder mehrere Arbeitseinrichtungen (59, 60, 61) mit hydraulisch betätigbaren Organen angeschlossen sind, und daß di Zuleitungen (50, 51) zu den Speichern ($S_D$, 49) sowie (62, 63, 64) zu den besagten Arbeitseinrichtungen (59, 60, 61) jeweils durch 2/1-Wege-Schaltventile, insbesondere Cartridge-Ventile (57, 58, 94, 95, 96) absperrbar sind, die ihre Schaltbefehle ($D_c'''$, $D_d'''$, $D_e'''$, $D_f'''$, $D_g'''$) ebenfalls von der Funktionssteuerschaltung (24) erhalten (Fig. 13).

21. Kraftfahrzeug nach Anspruch 2, dadurch gekennzeichnet, daß der zur Versorgung des Druckluftspeichers ($S_E$) der Fahrzeugbremsanlage (E) dienende Luftpresser ($A_E$) über eine Welle (66) mit einem Nebenabtrieb (4) der Brennkraftmaschine (1) in Verbindung steht, wobei in die Welle (66) eine Schaltkupplung (67) eingeschaltet ist, mit der der Luftpresser bei Nichtbedarf zwecks Vermeidung von Schleppverlusten durch von der Funktionssteuerschaltung (24) ausgegebene Befehle ($E'''$ bzw. $E_a'''$) vom Nebenabtrieb (4) abkuppelbar ist (Fig. 14, 15).

22. Kraftfahrzeug nach Anspruch 21, dadurch gekennzeichnet, daß zwischen Schaltkupplung (67) und Luftpresser ($A_E$) ein stufenlos oder stufig regelbares Getriebe (68) eingeschaltet ist, dessen Einstellung ebenfalls durch von der Funktionssteuerschaltung (24) ausgegebene Befehle ($E_b''$) gesteuert wird (Fig. 15).

23. Kraftfahrzeug nach den Ansprüchen 2, 3 und 21 oder 22, dadurch gekennzeichnet, daß der zur Versorgung des Druckluftspeichers ($S_E$) der Fahrzeugbremsanlage (E) dienende Luftpresser ($A_{E, F, G}$) auch zur Ladung wenigstens eines weiteren Druckluftspeichers ($S_F$, $S_G$) herangezogen wird, der zur Versorgung von druckluftbetätigbaren Arbeitseinrichtungen, wie Türöffnungs- und -schließmechanismen, zur bedarfsweisen Zusatzluftversorgung der Brennkraftmaschine (1), zur Verbrennungsluftversorgung eines zur Regenerierung eines Schadstoffilters (80) dienenden Brenners (75) oder dergleichen vorgesehen ist, und daß die Absperrung bzw. Freigabe der Druckluftspeicher ($S_E$, $S_F$, $S_G$) durch Absperrventile (69, 70, 74, 83, 84, 86, 91) erfolgt, die von Befehlen ($E_c'''$,

$E_d^{'''}$, $E_e^{'''}$, $E_f^{'''}$, $E_g^{'''}$, $E_h^{'''}$, $E_i^{'''}$) der Funktionssteuerschaltung (24) gesteuert werden (Fig. 14, 15).

24. Kraftfahrzeug nach Anspruch 1, mit automatischem Getriebe, dadurch gekennzeichnet, daß das automatische Getriebe (2) durch einen Regeleingriff beispielsweise von der Funktionssteuerschaltung (24) so einstellbar ist, daß es während des Schubbetriebes über eine größere Übersetzung mit dem Achsantriebsstrang (3) verbunden ist als im Zugbetrieb.

25. Kraftfahrzeug nach Anspruch 1, dadurch gekennzeichnet, daß die Prioritätenwahlschaltung (19) zwischen zwei Speicherlade-Rangfolgen, nämlich einer für Schubbetrieb und einer für Zugbetrieb, umschaltbar ist, wobei die Umschaltung von der einen auf die andere Speicherladerangfolge in Abhängigkeit von den die Betriebsartwechsel markierenden Signalen (12, 13) erfolgt.

**Claims**

1. Motor vehicle, especially truck or bus, with at least one combustion engine (1) and rear-mounted gearbox (2), to the output end (3) of which are connected an axle propulsion shaft and power units ($A_A$, $A_B$, $A_C$, $A_D$, $A_{E,F,G}$) which, if required, can be connected via power take-offs (4) and are necessary for the operation of secondary consumers (A, B, C, D, E, F, G) or the loading of reservoirs ($S_A$, $S_B$, $S_C$, $S_D$, $S_E$, $S_F$, $S_G$) of these secondary consumers and with a device to connect the propulsion unit which, having detected the change from drive to coast operation, serves to control a deliberate connection of the aforementioned power units to the power train of the vehicle and, subsequently, their functioning to ensure controlled charging of the reservoirs, for which charging an electronic control device (8) is provided that,

    a) on the basis of actual operating values for engine speed ($n_M$), travelling speed ($n_R$) and injection pump and accelerator pedal adjustment ($\alpha_{EP}$) fed to it, senses, by means of internal switching devices (9, 10, 11), if $n_R > 0$ and $\alpha_{EP} = 0$ and $n_M > n_{M1}$ - (idling speed), a change from drive to coast operation and, if $n_R \geq 0$ and $\alpha_{EP} > 0$ and $n_M > n_{M1}$, a change from coast to drive operation by logic connection of these three actual values and that,

    b) on detecting the drive operation mode and, if necessary, after a defined delay time, deliberately connects to the power train (3, 1, 4) one or more of the power units ($A_A$, $A_B$, $A_C$, $A_D$, $A_{E,F,G}$) of the secondary consumers (A, B, C, D, E, F, G) in a certain order of precedence determined in a priority selector circuit (19) on the basis of supply and safety requirements and also in dependence of charging requirements of the reservoirs ($S_A$, $S_B$, $S_C$, $S_D$, $S_E$, $S_F$, $S_G$) indicated by comparison of predetermined set-point values and registered actual values and that,

    c) on detecting a change from coast to drive operation, keeps, by means of the priority selector circuit (19), also in a certain order of precedence determined on the basis of supply and safety requirements,

    - the power unit(s) connected to the propulsion unit as in the previous coast operation if more reservoir charging operations are required, or,
    - if more reservoirs require charging, connects the pertaining propulsion unit(s) to the combustion engine (1) too,
    - and that,

    d) having recognised that each reservoir is sufficiently charged, prevents any further charging of reservoirs in either coast or drive operation.

2. Motor vehicle as under Claim 1, characterised by the fact that, by means of the control unit (8) the charging and discharging of the following storage devices can be controlled, i.e.

    - of the coolant circuit as a thermal storage device ($S_A$) of the engine cooling system (A) by connecting up the fan ($A_A$) via a drive connection ($AV_A$),
    - of a pressure medium reservoir ($S_B$) of the power steering system (B) by connecting up a steering booster pump ($A_B$) via a drive connection ($AV_B$),
    - of a battery as accumulator (SC) of the electric system (C) by connecting up a generator ($A_C$) via a drive connection ($AV_C$),
    - of a high pressure reservoir ($S_D$) of a braking energy recovery device (D) by connecting up a hydrostat ($A_D$) via a drive connection ($AV_D$),
    - of a compressed-air reservoir ($S_E$) of the vehicle brake system (E) by connecting up an air compressor ($A_E$) via a drive connection ($AV_E$),
    - of a compressed-air reservoir ($S_F$) of a working device (F) that can be actuated pneumatically, as eg a door opening and closing mechanism, by connecting up an air compressor ($A_F$) via a drive connection ($AV_F$),
- of a compressed-air reservoir ($S_G$) of an additional air supply system (G) by connecting up an air compressor ($A_G$) via a drive connection ($AV_G$).

3. Motor vehicle as under Claim 2, characterised by the fact that, as far as possible, a number of small reservoirs to be charged with the same pressure medium are combined to form a working reservoir with a correspondingly larger volume and that, as far as possible, a number of working machines are combined to form a more powerful working unit.

4. Motor vehicle as under Claim 1, characterised by the fact that the electronic control device (8) is fitted with a comparator (9) which, in order to recognise the coast and drive operation of the combustion engine (1), is fed with the actual values of the engine speed ($n_M$), the travelling speed derived from a wheel speed ($n_R$) and the position of the injection pump and the accelerator pedal ($\alpha_{EP}$) and which, if
a) $n_R > 0$ and $\alpha_{EP} = 0$ and $n_M > n_{M1}$, (idling speed), switches through a first AND element (10), the output signal (12) of which signals the coast operation mode, and, if
b) $n_R \geqq 0$ and $\alpha_{EP} > 0$ and $n_M > n_{M1}$, switches through a second AND element (11), the output signal (13) of which signals the drive operation mode.

5. Motor vehicle as under Claim 4, characterised by the fact that the outputs (12, 13) of the two AND elements (10, 11) are connected, directly or via an OR element, to the input of a signal amplifier (14), to which amplifier is connected in series a delay element (15) that delays the transmission of the amplified signal by a set period of time and whose output signal is used to trigger the reservoir charging control functions of the control device (8) via the other switching organs of the latter.

6. Motor vehicle as under the Claims 1, 4, and 5, characterised by the fact that the electronic control device (8) is equipped with an input memory (16) for the upper and lower limit values ($A'_{min}$, $A'_{max}$, $B'_{min}$, $B'_{max}$, $C'_{min}$, $C'_{max}$, $D'_{min}$, $D'_{max}$, $E'_{min}$, $E'_{max}$, $F'_{min}$, $F'_{max}$, $G'_{min}$, $G'_{max}$) as set-point values of the reservoir charges ($S_A$, $S_B$, $S_C$, $S_D$, $S_E$, $S_F$, $S_G$) and with an input memory (17) for the actual values ($A''$, $B''$, $C''$, $D''$, $E''$, $F''$, $G''$) of the aforementioned reservoir charges and with a comparator (18) for the individual set-point and actual values which sends a signal for the relevant reservoir to be charged when the charge falls below the set-point range and for the charging of the relevant reservoir to be stopped when the upper set-point limit value has been reached or exceeded.

7. Motor vehicle as under Claims 1, 4, 5 and 6, characterised by the fact that a function control circuit (24) is connected to the priority selector circuit (19), said function control circuit emitting via the output amplifier (25) control signals ($A'''$, $B'''$, $C'''$, $D'''$, $E'''$, $F'''$, $G'''$) which control the connection, operation and disconnection of the charging organs ($A_A$, $A_B$, $A_G$, $A_D$, $A_{E,F,G}$) and the pertaining drive connections ($AV_A$, $AV_B$, $AV_C$, $AV_D$, $AV_E$, $AV_F$, $AV_G$) to and from the combustion engine (1).

8. Motor vehicle as under Claim 7, characterised by the fact that the function control circuit (24) emits via another output amplifier block (26) further control signals that control the working functions of the systems (A, B, C, D, E, F, G) to be operated.

9. Motor vehicle as under Claim 2, characterised by the fact that the drive connection ($AV_A$) for the fan ($A_A$) in the form of an infinitely variable or stepped gearbox (30) which on the one hand is connected to the aforementioned fan ($A_A$) and, on the other hand, with a power take-off (4) of the combustion engine (1) and whose output speed can be varied between zero and a maximum by means of corresponding control commands ($A'''$) of the function control circuit (24) (Fig.4).

10. Motor vehicle as under Claim 2, characterised by the fact that the drive connection ($AV_A$) for the fan ($A_A$) in the form of a shaft (28) connected to a power take-off (4) of the combustion engine (1) linked to which shaft is a clutch (29) operated by control commands ($A'''$) of the function control circuit (24) (Fig. 3).

11. Motor vehicle as under Claim 2, characterised by the fact that the drive connection ($AV_A$) for the fan ($A_A$) in the form of a non-adjustable hydraulic unit (31 A) connected to a power take-off (4) of the combustion engine (1) via a shaft (32) with clutch (33) and another hydraulic unit (31 B) which is hydraulically linked to the former and connected with the shaft of the fan ($A_A$), with the clutch (33) being actuated by control commands ($A'''$) emitted by the function control circuit (Fig. 5).

12. Motor vehicle as under Claim 2, characterised by the fact that the drive connection ($AV_A$) for the fan ($A_A$) in the form of a first hydraulic unit (34 A) connected with a power take-off (4) of the combustion engine (1), which hydraulic unit can be adjusted between zero and maximum delivery rate, and another adjustable hydraulic unit (34 B) which is hydraulically linked to the former, connected with the shaft of the fan ($A_A$), and adjusted by control commands ($A_a'''$, $A_b'''$) emitted by the function control circuit (Fig. 6).

13. Motor vehicle as under Claim 2, characterised by the fact that the drive connection ($AV_B$) in the form of a shaft (40) with clutch (41) between a non-adjustable power-steering pump ($A_B$, $A_{B1}$) and a power take-off (4) of the combustion engine (1) which clutch receives its switching commands ($B'''$) from the function control circuit (24), as hereby this power-steering pump ($A_B$, $A_{B1}$) feeds hydraulic oil from a reservoir (42) to the connected pressure medium reservoir ($S_B$) and/or the power-steering circuit (43) (Fig. 8).

14. Motor vehicle as under Claim 13, characterised by the fact that a second power-steering pump ($A_{B2}$) which directly and continually supplies the connected power-steering control circuit (44) with a basic output and is permanently connected to a power take-off (4) of the combustion engine (1) is connected in parallel with the said power-steering pump (AB1) (Fig. 9).

15. Motor vehicle as under Claim 2, characterised by the fact that a power-steering pump ($A_B$, $A_{B1}$) adjustable between zero and maximum delivery rate with direct drive connection ($AV_B$) by means of a shaft (36) from a power take-off (4) of the combustion engine (1) is provided which receives its adjusting commands ($B'''$) from the function control circuit (24) and feeds hydraulic oil from a reservoir (37) to the connected pressure medium reservoir ($S_B$) and/or to the power-steering circuit (38) (Fig. 7).

16. Motor vehicle as under Claim 15, characterised by the fact that another power-steering pump ($A_{B2}$) which directly and continually supplies the connected power-steering circuit (39) with a basic output is connected to the same shaft (36) as the aforementioned power-steering pump ($A_{B1}$) (Figs. 7 and 10).

17. Motor vehicle as under Claim 2, characterised by the fact that the genernator ($A_C$) for charging the battery ($S_C$) is connected with a power take-off (4) of the combustion engine (1) via a shaft (45) and with the battery ($S_C$) via a charging line (47) which can be closed and interrupted by means of a switch (46), the charging of the battery being controlled by commands ($C'''$, $C_a'''$) of the function control circuit (24) triggered by corresponding actuation of the switch (47) (Fig. 11).

18. Motor vehicle as under Claim 17, characterised by the fact that a clutch (48) is integrated in the shaft between the genernator ($A_C$) and power take-off (4) which clutch, in order to avoid unnecessary drag losses, can be used to interrupt the alternator drive ($A_C$) by means of corresponding switching commands ($C_b'''$) of the function control circuit (24) Figs. 11, 12.

19. Motor vehicle as under Claim 2, characterised by the fact that the high pressure reservoir ($S_D$) of the braking energy recovery device (D) can be loaded from a low pressure reservoir (49) by means of a hydrostat ($A_D$) which can be adjusted by control commands ($Da'''$) from the function control circuit (24) and is connected with a power take-off (4) of the combustion engine (1) or the gearbox (2) via a shaft (55) into which is integrated a clutch (56) that can be actuated by commands ($D_b'''$) of the function control circuit (24) and, in order to avoid drag losses, serves to disconnect the hydrostat ($A_D$) from the power take-off (4) if it is not required (Pic. 13).

20. Motor vehicle as under Claim 19, characterised by the fact that apart from the two reservoirs ($S_D$, 49) one or more working systems (59, 60, 61) with organs that can be hydraulically actuated are connected to the hydrostat ($A_D$) and that the input lines (50, 51) to the reservoirs ($S_D$, 49) and (62, 63, 64) to the said working systems (59, 60, 61) can be locked by means of 2/1-way switching valves, especially cartridge valves (57, 58, 94, 95, 96) which likewise receive their switching commands ($D_c'''$, $D_d'''$, $D_e'''$, $D_f'''$, $D_g'''$) from the function control circuit (24) (Fig. 13).

21. Motor vehicle as under Claim 2, characterised by the fact that the compressor ($A_E$) which serves to supply the compressed-air reservoir ($S_E$) of the vehicle brake system (E) is connected with a power take-off (4) of the combustion engine (1) via a shaft (66) in to which a clutch (67) is integrated that, if the compressor is not needed and to avoid drag losses, is used to disengage the compressor from the power take-off (4) via commands ($E'''$ and/or

E$_a$''') emitted from the function control circuit (24) (Figs. 14, 15).

**22.** Motor vehicle as under Claim 21, characterised by the fact that a gearbox (68), either infinitely variable or controllable in stages, is integrated between the clutch (67) and the air compressor (A$_E$), adjustment of which gearbox is also controlled by commands (E$_b$''') emitted from the function control circuit (24) (Fig. 15).

**23.** Motor vehicle as under Claims 2, 3, and 21 or 22, characterised by the fact that the compressor (A$_{E, F, G}$) which supplies the compressed-air reservoir (S$_E$) of the vehicle brake system (E) is also used to charge at least one more compressed-air reservoir (S$_F$, S$_G$) which is designed to supply pneumatically actuated working systems such as door opening and closing mechanisms, the combustion engine (1) with additional air as necessary, a burner (75) or a similar device designed to regenerate a pollutant filter (80) with combustion air, and that the compressed-air reservoirs (S$_E$, S$_F$, S$_G$) can be locked and opened by shut-off valves (69, 70, 74, 83, 84, 86, 91) which are controlled by commands (E$_c$''', E$_d$''', E$_e$''', E$_f$''', E$_g$''', E$_h$''', E$_i$''',) of the function control circuit (24) (Fig. 14, 15).

**24.** Motor vehicle as under Claim 1 with automatic gearbox, characterised by the fact that the automatic gearbox (2) can, by means of a control operation effected eg by the function control circuit (24), be adjusted in such away that in coast operations it is connected via a higher transmission ratio with the axle propulsion shaft (3) than in drive operations.

**25.** Motor vehicle as under Claim 1, characterised by the fact that the priority selector circuit (19) can be switched between two hierarchical orders for the loading of the reservoirs, ie one for coast operations and one for drive operations, the switching operations from the one hierarchical order for loading operations to the other being effected in dependence of the signals (12, 13) indicating the change in the operating mode.

**Revendications**

**1.** Véhicule automobile notamment camion ou autocar comportant au moins un moteur à combustion interne (1) suivi d'une transmission (2) dont la sortie (3) est reliée à une ligne de transmission d'essieux et par des sorties auxiliaires (4), le cas échéant sur des ensembles de sortie (A$_A$, A$_B$, A$_c$, A$_D$, A$_E$, A$_{F,G}$) pour la mise en oeuvre d'utilisateurs auxiliaires (A, B, C, D, E, F, G) ou pour charger les accumulateurs (S$_A$, S$_B$, S$_C$, S$_D$, S$_E$, S$_F$, S$_G$) de tels utilisateurs auxiliaires, ainsi qu'une installation pour la mise en oeuvre d'un freinage à récupération avec branchement des ensembles d'entraînement cidessus, après détection du passage du mode de traction au mode de en inertie forcée, par un branchement défini sur la ligne de sortie du véhicule, le fonctionnement de ces ensembles étant susceptible de commander dans le sens d'une charge réglée des accumulateurs, avec une installation de commande électronique (8), qui :

a) en fonction des signaux de valeur réelle de fonctionnement qu'elle reçoit et qui correspondent à la vitesse de rotation du moteur (n$_M$) à la vitesse de déplacement (n$_R$) et au réglage de la pédale d'accélération ou des pompes d'injection ($\alpha_{EP}$) est alors commutée par les moyens de commutation internes (9, 10, 11) si n$_R$ > à 0 et $\alpha_{EP}$ = 0 et n$_M$ > à n$_{M1}$ (vitesse de rotation de ralenti) correspondant à un passage du mode de traction au mode en inertie forcée, et pour n$_R$ ≥ à 0 et $\alpha_{EP}$ à 0 et n$_M$ > à n$_{M1}$, commande un passage du mode en inertie forcée au mode de traction par une combinaison logique des trois valeurs réelles et qui :

b) lors de la reconnaissance du mode en inertie forcée, le cas échéant après une temporisation déterminée, relie la ligne d'entraînement de sortie (3, 1, 4), de manière dirigée à un ou plusieurs ensembles d'entraînement (A$_A$, A$_B$, A$_C$, A$_D$, A$_{E,F,G}$) des utilisateurs auxiliaires (A, B, C, D, E, F G) dans un certain ordre fixés dans un sélecteur de priorité (19) selon les nécessités de l'alimentation et les conditions de sécurité, ainsi qu'en outre en fonction des valeurs de consigne prédéterminées par comparaison avec des valeurs réelles déterminées correspondant à la demande de charge des accumulateurs (S$_A$, S$_B$, S$_C$, S$_D$, S$_E$, S$_F$, S$_G$) et,

c) lors de la reconnaissance d'un changement du mode d'inertie forcée au mode de traction, le sélecteur de priorité (19) branche selon une succession définie selon les nécessités de l'alimentation et les conditions de sécurité,

- le ou les ensembles d'entraînement si la demande de charge des accumulateurs continue d'être nécessaire, comme précédemment en mode en inertie forcée, en les maintenant toujours en liaison d'entraînement,

- en présence d'une demande de charge d'autres accumulateurs, le ou les ensembles d'entraînement correspondants sont également reliés au moteur à combustion interne (1),
- et,

d) lorsqu'un remplissage suffisant est constaté pour chaque accumulateur, l'installation arrête toute poursuite de la charge tant en mode en inertie forcée qu'en mode de traction.

2. Véhicule automobile selon la revendication 1, caractérise en ce qu'on commande la charge ou la décharge des accumulateurs suivants à l'aide de l'installation de commande (8) :

- le circuit de fluide de refroidissement comme accumulateur thermique ($S_A$) de l'installation de refroidissement du moteur (A) par mise en oeuvre du ventilateur ($A_A$) par une liaison d'entraînement ($AV_A$),
- un accumulateur de fluide sous pression ($S_B$) de l'installation de direction assistée (B) par le branchement d'une pompe de direction assistée ($A_B$) par une liaison d'entraînement ($AV_B$),
- une batterie comme accumulateur ($S_C$) de l'installation électrique (C) par branchement d'un générateur ($A_C$) par une liaison d'entraînement ($AV_C$),
- un accumulateur à haute pression ($S_D$) d'une installation de freinage avec récupération (D) par branchement d'un hydrostat ($A_D$) par une liaison d'entraînement ($AV_D$),
- un accumulateur d'air comprimé ($S_E$) de l'installation de freinage (E) du véhicule par branchement d'un compresseur d'air ($A_E$) et d'une ligne de transmission ($AV_E$),
- un accumulateur d'air comprimé ($S_F$) d'une installation utilitaire F alimentée en air comprime, comme par exemple mécanisme d'ouverture et de fermeture des portes, par le branchement d'un compresseur d'air ($A_F$) par une liaison d'entraînement ($AV_F$),
- un accumulateur d'air comprimé ($S_G$) d'une installation d'alimentation auxiliaire (G) par branchement d'un compresseur d'air ($A_C$) par une liaison d'entraînement ($AV_G$).

3. Véhicule automobile selon la revendication 2, caractérisé en ce que dans la mesure où cela est possible, un certain nombre de plus petits accumulateurs à charger avec le même fluide sont réunis en un accumulateur utilitaire de plus grand volume et de la même manière, dans la mesure du possible, un certain nombre de machines utilitaires est réuni en une machine utilitaire de plus grande puissance.

4. Véhicule automobile selon la revendication 3, caractérisé en ce que l'installation de commande électronique (8) comporte pour reconnaître le mode en inertie forcée et le mode de traction du moteur à combustion interne (1), un comparateur (9) qui reçoit les valeurs réelles de la vitesse de rotation du moteur ($n_M$), de la vitesse de déplacement ($n_R$) dérivée de la vitesse de rotation d'une roue et la position de la pédale d'accélérateur ou des pompes d'injection ($\alpha_{EP}$), et ce comparateur avec :

a) si $n_R > $ à $0$ et $\alpha_{EP} = 0$ et $n_M > $ à $n_{M1}$ - (vitesse de rotation de ralenti) débloque une première porte ET (10) dont le signal de sortie (12) signale le mode en inertie forcée,

b) si $n_R \geq 0$ et $\alpha_{EP} > 0$ et $n_M > n_{M1}$ commande une seconde porte ET (11) dont le signal de sortie (13) signale le mode de traction.

5. Véhicule automobile selon la revendication 4, caractérisé en ce que les sorties (12, 13) des deux portes ET (10, 11) sont reliées directement ou par l'intermédiaire d'une porte OU à l'entrée d'un amplificateur de signal (14) suivie d'un élément de temporisation (15) qui retarde la transmission du signal amplifié, d'un retard réglé et dont le signal de sortie déclenche les fonctions de commande de charge d'accumulateur de l'installation de commande (8) par les autres organes de commutation.

6. Véhicule automobile selon l'une des revendications 1, 4, 5, caractérisé en ce que l'installation de commande électronique (8) comporte une mémoire d'entrée (16) pour les valeurs limites supérieures et inférieures ($A'_{min}$, $A'_{max}$, $B'_{min}$, $B'_{max}$, $C'_{min}$, $C'_{max}$, $D'_{min}$, $D'_{max}$, $E'_{min}$, $E'_{max}$, $F'_{min}$, $F'_{max}$, $G'_{min}$ $G'_{max}$,) comme grandeurs de consigne des charges des accumulateurs ($S_A$, $S_B$, $S_C$, $S_D$, $S_E$, $S_F$, $S_G$) ainsi qu'une mémoire d'entrée (17) pour les valeurs réelles (A", B", C", D", E", F", G") des charges d'accumulateurs ci-dessus ainsi qu'un comparateur (18) pour les valeurs réelles et les valeurs de consigne, et qui lors d'un dépassement vers le bas d'une plage de valeur de consigne émet un signal de demande de charge de l'accumulateur correspondant et qui lorsque la valeur limite de consigne supérieure est atteinte ou est dépassée, émet un signal de demande pour couper la charge de l'accumulateur correspondant.

7. Véhicule automobile selon l'une des revendications 1, 4, 5, 6, caractérisé en ce qu'un circuit de commande fonctionnelle (24) est relié au sélecteur de priorité (19) et qui émet par un amplificateur de sortie (25) des signaux de commande (A''', B''', C''', D''', E''', F''', G'''), par lesquels se commande le branchement, la mise en oeuvre et la coupure des organes de charge ($A_A$, $A_B$, $A_C$, $A_D$, $A_E$, $A_F$, $A_C$) ou les liaisons d'entraînement correspondantes ($AV_A$, $AV_B$, $AV_C$, $AV_D$, $AV_E$, $AV_F$, $AV_G$) sur le moteur à combustion interne (1).

8. Véhicule automobile selon la revendication 7, caractérisé en ce que le circuit de commande fonctionnelle (24) émet par un autre bloc amplificateur de sortie (26) d'autres signaux de commande pour commander les fonctions utilitaires des installations à mettre en oeuvre (A, B, C, D, E, F, G).

9. Véhicule automobile selon la revendication 2, caractérisé en ce que la liaison d'entraînement ($AV_A$) du ventilateur ($A_A$) est constituée par une transmission (30) en continu ou a étage, reliée d'une part au ventilateur et d'autre part, a une sortie auxiliaire (4) du moteur à combustion interne (1), transmission dont la vitesse de rotation de sortie est réglable entre la valeur nulle et la valeur maximale par des ordres de commande appropriés (A''') du circuit de commande fonctionnelle (24) (figure 4).

10. Véhicule automobile selon la revendication 2, caractérisé en ce que la liaison d'entraînement ($AV_A$) du ventilateur ($A_A$) est assurée par un arbre (28) équipé d'un embrayage (29) et branché entre le ventilateur ($A_A$) et une sortie auxiliaire (4) du moteur à combustion interne (1), cet embrayage étant actionné par des ordres de commande (A''') du circuit de commande fonctionnelle (24) (figure 3).

11. Véhicule automobile selon la revendication 2, caractérisé en ce que la liaison d'entraînement ($AV_A$) du ventilateur ($A_A$) est formée par un arbre (32) avec un embrayage (34) relié à une sortie auxiliaire (4) du moteur à combustion interne (1), un moteur hydraulique non réglable (31 A) ainsi qu'un autre moteur hydraulique (31 B) relié hydrauliquement à l'autre et à l'arbre du ventilateur ($A_A$), l'embrayage (33) étant commandé par des ordres de commande (A''') émis par le circuit de commande fonctionnelle (24) (figure 5).

12. Véhicule automobile selon la revendication 2, caractérisé en ce que la liaison d'entraînement ($AV_A$) du ventilateur ($A_A$) est constituée par une première machine hydraulique (34 A) reliée à une sortie auxiliaire (4) du moteur à combustion interne (1), et qui est réglable entre un débit nul et un débit maximum ainsi que par une autre machine hydraulique (34 B), réglable, couplée électriquement à la première et reliée à l'arbre du ventilateur ($A_A$), le réglage de la seconde machine hydraulique étant effectué par des ordres de commande ($A_a'''$, $A_b'''$) émis par le circuit de commande fonctionnelle (24) (figure 6).

13. Véhicule automobile selon la revendication 2, caractérisé en ce que la liaison d'entraînement ($AV_B$) entre une pompe de direction assistée ($A_B$, $A_{B1}$), non réglable et une sortie auxiliaire (4) du moteur à combustion interne (1) est formée par un arbre (40) avec un embrayage (41) qui reçoit ses ordres de commutation (B''') du circuit de commande fonctionnelle (24) et cette pompe de direction assistée ($A_B$, $A_{B1}$) prend du liquide hydraulique du réservoir (42) pour le fournir à l'accumulateur de fluide sous pression ($S_B$) auquel il est relié et/ou au circuit de commande de direction assistée (43) (figure 8).

14. Véhicule automobile selon la revendication 13, caractérisé en ce que la pompe de direction assistée ($A_{B1}$) a en parallèle une seconde pompe de direction assistée ($A_{B2}$), reliée directement au circuit de commande de direction assistée (44) et alimentant celui-ci en permanence d'un débit de base, cette pompe étant toujours reliée à une sortie auxiliaire (4) du moteur à combustion interne (1) (figure 9).

15. Véhicule automobile selon la revendication 2, caractérisé en ce qu une pompe de direction assistée ($A_B$, $A_{B1}$,) réglable entre un débit nul et un débit maximum est reliée par une liaison d'entraînement directe ($AV_B$) formée par un arbre (36) relié à une sortie auxiliaire (4) du moteur à combustion interne (1) et qui reçoit ses ordres de commande (B''') du circuit de commande fonctionnelle (24) et prend du liquide hydraulique d'un réservoir (37) pour fournir ce liquide à l'accumulateur de liquide sous pression ($S_B$) raccordé et/ou au circuit de direction assistée (38) (figure 7).

16. Véhicule automobile selon la revendication 15, caractérisé en ce que sur l'arbre (36) de la pompe de direction assistée ($A_{B1}$) il y a directement une pompe de direction assistée ($A_{B2}$), autre, reliée directement au circuit de direction assistée (39) et alimentant toujours celui-ci par un débit de base (figures 7 et 10).

17. Véhicule automobile selon la revendication 2, caractérisé en ce que le générateur ($A_C$) servant à charger la batterie ($S_C$) est relié par un arbre (45) à une sortie auxiliaire (4) du moteur à combustion interne (1) et par une ligne de charge (47) susceptible d'être fermée ou coupée par un interrupteur (46) sur la batterie ($S_C$), la charge de la batterie se faisant par un ordre approprié ($C'''$, $C_a'''$) du circuit de commande fonctionnelle (24) actionnant l'interrupteur (47) (figure 11).

18. Véhicule automobile selon la revendication 17, caractérisé en ce que l'arbre (45) comporte un embrayage (48) entre le générateur ($A_C$) et la sortie auxiliaire (4), cet embrayage pouvant être ouvert pour éviter toutes pertes de traînée inutiles de l'entraînement du générateur ($A_C$) par des ordres de commutation ($C_b'''$) appropriés fournis par le circuit de commande fonctionnelle (24).

19. Véhicule automobile selon la revendication 2, caractérisé en ce que l'accumulateur haute pression ($S_D$) peut être chargé par un hydrostat réglable ($A_D$) à partir de l'installation de freinage à récupération (D) et de l'accumulateur basse pression (49), l'hydrostat étant réglable par des ordres de commande ($D_a'''$) provenant de l'installation de commande fonctionnelle (24) et étant entraînée par un arbre (55) relié à la sortie auxiliaire (4) du moteur à combustion interne (1) ou de la transmission (2), en recevant des ordres ($D_b'''$) de l'installation de commande fonctionnelle (24) pour actionner l'embrayage (56) qui, pour éviter des pertes de traînées de l'hydrostat ($A_D$) peut être coupé de la sortie auxiliaire (4) en cas de non utilisation (figure 13).

20. Véhicule automobile selon la revendication (19), caractérisé en ce que l'hydrostat ($A_D$) est relié non seulement aux deux accumulateurs ($S_D$, 49) mais également à une ou plusieurs installations utilitaires (59, 60, 61) avec des organes à actionnement hydraulique et en ce que les conduites d'alimentation (50, 51) des accumulateurs ($S_D$, 49) ainsi que (62, 63, 64) vers les installations utilitaires ci-dessus (59, 60, 61) peuvent être coupées respectivement par des soupapes à 2/1 voies, notamment des soupapes à cartouche (57, 58, 94, 95, 96) et qui reçoivent leur ordre de commutation ($D_c'''$, $D_d'''$, $D_e'''$, $D_f'''$, $D_g'''$) également de l'installation de commande fonctionnelle (24) (figure 13).

21. Véhicule automobile selon la revendication 2, caractérisé en ce que le compresseur d'air ($A_E$) servant à l'alimentation de l'accumulateur d'air comprimé ($S_E$) de l'installation de freinage (E) du véhicule est relié à une sortie auxiliaire (4) du moteur à combustion interne (1) par l'intermédiaire d'un arbre (66) équipé d'un embrayage (67), et qui lorsque le compresseur d'air n'est pas utilisé, peut être coupé de la sortie auxiliaire (4) par des ordres ($E'''$ ou $E_a'''$) émis par le circuit de commande fonctionnelle (24) pour éviter les pertes par traînées (figures 14, 15).

22. Véhicule automobile selon la revendication 21, caractérisé en ce qu'entre l'embrayage (67) et le compresseur d'air ($A_E$), il y a une transmission (68) réglable en continu ou par palier et dont le réglage est également commandé par des ordres ($E_b'''$) émis par l'installation de commande fonctionnelle (24) (figure 15).

23. Véhicule automobile selon l'une des revendications 2, 3, 21 ou 22, caractérisé en ce que le compresseur d'air ($A_{E, F, G}$) servant à l'alimentation de l'accumulateur d'air comprimé ($S_E$) de l'installation de frein (E) du véhicule, est également utilisé pour charger au moins un autre accumulateur d'air comprimé ($S_F$, $S_G$) qui sert à l'alimentation d'installations utilitaires actionnées par air comprimé, telles que des mécanismes d'ouverture et de fermeture de porte, pour l'alimentation le cas échéant en air complémentaire du moteur à combustion interne (1), pour l'alimentation en air comburant d'un brûleur (75) servant à la régénération d'un filtre de protection contre l'émission de produits nocifs (80) ou analogues et en ce que la fermeture ou la libération des accumulateurs d'air comprimé ($S_F$, $S_G$) se fait par des soupapes d'arrêt (69, 70, 74, 83, 84, 86, 91) qui reçoivent des ordres ($E_c'''$, $E_d'''$, $E_e'''$, $E_f'''$, $E_g'''$, $E_h'''$, $E_i'''$) de l'installation de commande fonctionnelle (24) (figures 14, 15).

24. Véhicule automobile selon la revendication 1 à transmission automatique, caractérisé en ce que la transmission automatique (2) se règle par une intervention de régulation exercée par exemple par l'installation de commande fonctionnelle (24) pour que pendant le mode en inertie forcée elle soit reliée avec un rapport de démultiplication plus grand à la ligne de transmission d'essieu (3) qu'en mode de traction.

25. Véhicule automobile selon la revendication 1, caractérisé en ce que le sélecteur de priorité (19) peut commuter entre deux séries de charge d'accumulateur, à savoir l'un pour le mode en inertie forcée l'autre pour le mode de traction et la commutation d'une succession de charge d'accumulateur à l'autre se fait à l'aide de signaux (12, 13) qui définissent les alternances de mode de fonctionnement.

EP 0 335 086 B1

A'min A'max B'min B'max C'min C'max D'min D'max E'min E'max F'min F'max G'min G'max

6

7

5

A A" S_A A_A AV_A

B B" S_B A_B AV_B

C C" S_C A_C AV_C

D D" S_D A_D AV_D

E E" S_E A_{E,F,G} AV_E

F F" S_F

G G" S_G

4

1

2

3

8

9

$n_M$

$h_R$

$\alpha_{EP}$

$n_M > h_{ML}$

$h_R \gtreqless O$

$h_R > O$

$\alpha_{EP} > O$

$\alpha_{EP} = O$

11

&

13

10

&

12

14

15

20

21

16

17

18

22

97

19

23

24

26

25

G"'
F"'
E"'
D"'
C"'
B"'
A"'

G"
F"
E"
D"
C"
B"
A"

Fig.1

EP 0 335 086 B1

A"

1

27

S_A

A

Fig.2

A'''

Fig.4

30

41

AV_A

A_A

Fig.3

A'''

29

28

4

A_A

AV_A

A_b''' A_a'''

41

A_A

AV_A

Fig.6

Fig.5

A'''

41

A_A

AV_A

33

Fig.7

Fig.8

Fig.9

Fig.10

EP 0 335 086 B1

Fig.12

Fig.11

Fig.13

EP 0 335 086 B1

Fig.14

Fig.15

25